(19) Europäisches Patentamt
European Patent Office
Office européen des brevets

(11) EP 3 842 501 A1

(12) EUROPEAN PATENT APPLICATION

(43) Date of publication:
**30.06.2021 Bulletin 2021/26**

(21) Application number: **19383186.4**

(22) Date of filing: **23.12.2019**

(51) Int Cl.:
*C09D 183/04* (2006.01) *C09D 5/14* (2006.01)
*C09D 5/16* (2006.01) *C09D 183/10* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Fundación Tecnalia Research & Innovation**
**48160 Derio - Bizkaia (ES)**

(72) Inventors:
- **Agustin Saenz, Cecilia**
**20009 Donostia-San Sebastián (ES)**
- **Brusciotti, Fabiola**
**20009 Donostia-San Sebastián (ES)**
- **Izagirre Etxeberria, Usoa**
**20009 Donostia-San Sebastián (ES)**

(74) Representative: **ZBM Patents - Zea, Barlocci & Markvardsen**
**Rambla Catalunya, 123**
**08008 Barcelona (ES)**

(54) **AN OMNIPHOBIC AND BIOCIDE SOL-GEL COATING COMPOSITION**

(57) The present invention relates to repellent sol-gel coatings, namely to repellent, omniphobic and biocide sol-gel coating compositions useful as non-stick surfaces. Particularly, the repellent, omniphobic and biocide sol-gel coating compositions of the present invention are useful to prepare antiadhesive, easy-to-clean, antifogging, anti-icing and antifouling surfaces, for having a durable low interfacial energy and non-leaching antibacterial activity also with low roughness and anticorrosion properties. The present invention also relates to a process for the preparation of the sol-gel coated substrate and the coated substrate obtainable by the process.

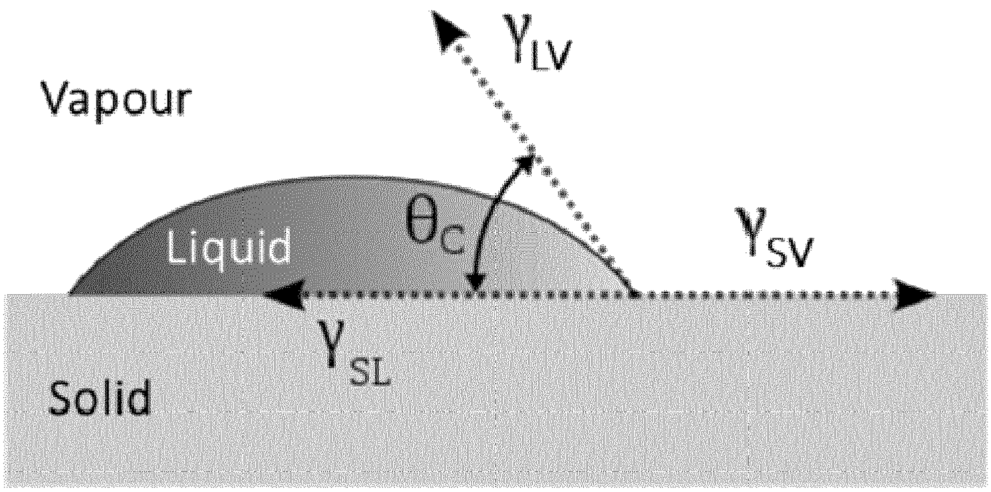


Fig. 1

EP 3 842 501 A1

## Description

The present invention relates to sol-gel coatings, particularly to repellent, omniphobic and biocide sol-gel coating compositions useful as non-stick surfaces. The repellent, omniphobic and biocide sol-gel coating compositions of the present invention are useful to prepare antiadhesive, easy-to-clean, antifogging, anti-icing and antifouling surfaces, for having a durable low interfacial energy and non-leaching antibacterial activity also with low roughness and anticorrosion properties. The present invention also relates to a process for the preparation of the sol-gel coated substrate and the coated substrate obtainable by the process.

## Background Art

The surface energy is an important property that influences the material's wettability, adhesion and friction properties and therefore, it may be modulated to reduce adherence of undesirable agents such as water, oil, grease, soiling, dust or ice during its life service. In particular, the wetting behaviour of a surface by a liquid is governed by both the surface free energy and its topography. Perfluorinated polymers are known for being materials with extremely low surface free energy, which results in an antiadhesive behaviour for polar and non-polar substances. Furthermore, the high strength of the carbon-fluoro bond grants excellent thermal, chemical, photochemical and hydrolytic stability, which are relevant features for outdoor application and weathering resistance.

Besides, it is also well known that the wetting of a surface by a liquid is affected by its roughness. Indeed, an effective way to enhance the hydrophobic properties of a coating is to increase its surface roughness with a given topography. For example, coatings prepared with the highly inert and non-polar material polytetrafluoroethylene (i.e. perfluorinated polymer) known for having an intrinsic low surface free energy have disclosed in the state of the art water contact angle values between 90-100° for surfaces with low roughness in the order of 8 nm root mean square (rms). However, the same material with a surface roughness in the order of 100 nm root mean square (rms) has presented superhydrophobic properties, thus water contact angle value higher than 150°. However, the application of coatings of well-known dirt repellent materials like polytetrafluroethylene requires high process temperatures which exceed the maximum allowable temperature of several substrates. On the other hand, a high surface roughness can have an undesirable remarkable effect in the attainment of easy-to-clean surfaces. Prevention of dirt and soiling sticking as well as organic materials that promote biofilm growth can be encouraged by minimizing the contact area between surface and contaminants, by means of very smooth surfaces.

Apart from inert soiling, substances of biological origin are the root cause of the formation of biofilm and biofouling in most industrial systems. A biofilm is an agglomeration of bacteria on a surface that is surrounded by extracellular polysaccharide polymeric substances, which are produced by the bacteria themselves to help them get attached to the surfaces and bind to one another. The formation of a biofilm of microorganisms usually results in the establishment of a macroscopic community of living organisms on a (submerged) surface with devastating effects on engineered materials (also known as biofouling). The biofouling affects a wide range of sectors (for instance marine applications, sanitary/medical field, household and other industrial sectors such as food packaging, heat transfer and air-conditioning systems, among others) creating problems such as microbially influenced corrosion, product contamination, anti-hygienic conditions and the spread of infections and diseases causing threats to public health.

In particular, biofouling is a very dynamic process which implies firstly, the formation of a layer of proteins from bacteria adsorbed to a pristine surface, that may happen within seconds to minutes after immersion and it is strongly influenced by both the topographical morphology and chemical properties of the surface. Protein conformation defines functionality with respect to cell adhesion. In fact, this first protein layer acts as a conditioning film for the settlement of micro-organisms such as diatoms.

In order to avoid the formation of a biofilm, the surface should ease the detachment of the protein layer or kill the bacteria. In fact, in marine applications two main approaches are usually followed for attaining antifouling properties: (i) preventing biofoulings from attaching to the surface (foul-release property), through coatings with controlled low interfacial energy; or (ii) killing the biofouling (bactericidal activity), by incorporating species with controlled release of enzymatic natural biocide in the coatings. Regarding the first strategy, foul-release property is attributed to a surface with low interfacial energy, low elastic modulus, low glass transition temperature and low roughness, resulting in weak adhesion with the adhesives secreted by biofoulings. A correlation between adhesion of organisms and the interfacial energy of a surface is given by the Baier curve. This relationship has been demonstrated in several marine and biomedical environments. A key characteristic of the Baier curve is that minimal adhesion is typically achieved at a critical surface tension of 22-24 $mJ/m^2$ (or mN/m). This surface tension, often referred to as surface energy, is approximately equal to the dispersive component for water. Regarding the strategy to kill the bacteria, traditionally, in marine environments, coatings containing biocide agents have been used to prevent the growth of potential fouling organisms such as bacteria, fungi, algae, plants and molluscs. However, the use of biocides is problematic because they can leach into the environment and cause harm to living organisms other than the ones they were intended to kill. In addition, cells in biofilm might

become resistant to antibacterial agents. For this reason, world-wide legislation is imposing increasing limitations on the use of biocides to combat biofouling (particularly in marine applications).

Active biocidal chemicals are essential in some applications and indeed have been used for hundreds of years in antisepsis, disinfection, and preservation. Antiseptics are biocides or products that destroy or inhibit the growth of microorganisms in or on living tissue (e.g. health care personnel handwashes and surgical scrubs) and disinfectants are similar but generally are products or biocides that are used on inanimate objects or surfaces.

Antimicrobial surfaces can be designed in several ways to kill microbes in the vicinity by conjugating polymer with agents such as antibiotics or antimicrobial peptides or complexed with biocide agents such as silver.

However, the bactericidal action of biocide agents relies to a certain extent on the leaching of the ions, which in addition may cause certain environmental issues. An alternative way to create contact-active surfaces is to immobilize polymers conjugated with antimicrobial proteins, although the antimicrobial activity of these proteins decreases after immobilization in many reported studies. A new promising class of antimicrobial polymeric surfaces is based on the immobilization of the bactericidal polymer chain to kill the bacteria upon contact. Some of these biocide polymer chains are those containing cationic groups, such as quaternary ammonium or phosphonium groups.

In particular, quaternary ammonium compounds (QAC) are highly effective antiseptics and disinfectants and have been used for a variety of clinical disinfection purposes. QACs are considered as excellent antibacterial agents due to their effective biocidal activity, long term durability and environmentally friendly performance and they are membrane active agents (i.e., with a target site predominantly at the cytoplasmic inner membrane in bacteria or the plasma membrane in yeasts). The following sequence of events occurs with microorganisms exposed to cationic agents: (i) adsorption and penetration of the agent into the cell wall; (ii) reaction with the cytoplasmic membrane (lipid or protein) followed by membrane disorganization; (iii) leakage of intracellular low-molecular-weight material; (iv) degradation of proteins and nucleic acids; and (v) wall lysis caused by autolytic enzymes. This implies a loss of structural organization and integrity of the cytoplasmic membrane in bacteria, together with other damaging effects to the bacterial cell.

The deposition of organic monolayers containing quaternary ammonium groups has been shown by many authors to confer biocidal properties on a large variety of solid surfaces. However, unfortunately, leaks of QACs to the environment are still observed.

Therefore, from what it is known in the state of the art, there is still the need of providing environmentally friendly, versatile and stable coatings with low roughness and permanent multi-repellent and antimicrobial activity, without biocide agent leaching, capable to reduce dirt, soiling, grease and ice adherence as well as biofilm growth.

## Summary of Invention

Inventors have provided a stable sol-gel composition useful for preparing repellent coatings with low interfacial energy comprising a specific mixture of inorganic and organic precursors that lead to the formation of a functionalized hybrid organic-inorganic material at molecular level, even some of them having biocide activity. Furthermore, inventors have also provided a stable sol-gel composition useful for preparing omniphobic coatings with low interfacial energy comprising a specific mixture of inorganic and organic precursors that lead to the formation of a functionalized hybrid organic-inorganic material at molecular level.

The use of metal or semimetal organo-alkoxide compounds as sol-gel precursors in which the organic moiety is linked to the central atom by a non-hydrolysable carbon-metal or carbon-semimetal bond (particularly a C-Si bond), permits to design a sol-gel material with the desired functionalization covalently linked to the inorganic network. In particular, the sol-gel composition of the present invention is a versatile composition which allows attaining permanent repellent, omniphobic, biocide or repellent-biocide functionalities thanks to the presence of appropriate moieties covalently bonded to the network through metal-C or semimetal-C bonds (particularly C-Si bonds). This fact will avoid leaching of the functional moieties and will guarantee the durability, stability and homogeneity of the wettability, surface energy and biocide properties also provided by the perfect adhesion of the sol-gel coating to a huge variety of substrates such as metal, metal alloys, glass and plastic surfaces.

Particularly, the sol-gel coating composition of the invention comprises a hybrid matrix functionalized with covalently bonded polyfluoroalkyl chain, alkyl chain, quaternary ammonium compound or mixture thereof which are introduced in the sol-gel network by means of fluoroalkyl silane (FAS), alkyl silane (CAS) quaternary ammonium silane (QAS), or a mixture thereof respectively, without compromising the integrity of the hybrid matrix and permitting having the desired repellent and omniphobic properties with a low interfacial energy as well as a permanent and non-leaching biocide activity. It is remarkable that this repellent omniphobic, biocide or dual effects is achieved by the incorporation of extremely low quantities of polyfluoroalkyl (FAS-based), alkyl (CAS-based), quaternary ammonium silane (QAS-based) or a mixture thereof. On the one hand, the polyfluoroalkyl chains (FAS-based) chemically bonded to the coating network lead to durability of the omniphobic property as the polyfluoro-carbon moiety does not migrate out of the coating due to its covalent bonding to the structure. On the other hand, the quaternary ammonium silanes (QAS-based), are the perfect candidates to prepare materials with immobilized biocide organic moiety due to the presence of the non-hydrolysable Si-C bond, thus permitting to obtain non-leaching biocides with permanent activity. The hydrolysis and condensation of the alkoxy groups let to obtain quaternary ammonium moiety chemically bonded to the coating matrix.

Furthermore, the inventors have also surprisingly found that sol-gel coating compositions of the invention which are prepared by incorporating acrylate or methacrylate organic precursors (i.e. an organic precursors of formula (VI) and (VII)) compatible with organo-alkoxysilanes and zirconium alkoxide without the need of the presence of functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof. Furthermore, these sol-gel coating compositions also add a high levelling ability to the coating. It is advantageous because these sol-gel coating compositions allows obtaining super-smooth surfaces decreasing the intrinsic original roughness of the substrate.

As it is shown in the experimental section, the sol-gel coating compositions of the present invention are useful as repellent or multi-repellent surfaces for having low interfacial energy, or as antifouling surfaces for having low interfacial energy combined with bactericide activity. Particularly, the coating surfaces prepared with sol-gel coating compositions of the present invention comprising at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof showed water contact angle values higher than 90° and hexadecane contact angle values higher than 90°, which makes them hydrophobic and oleophobic surfaces with an interfacial free energy tailored between 8 to 30 mJ/$m^2$ even showing an extremely low roughness. Furthermore, the coating surfaces prepared with sol-gel coating compositions of the present invention showed a biocidal activity. Particularly, they killed all colony forming units (CFU) of Escherichia Coli after 24 h of contact according to ISO22196 standard, showing roughness values as low as 2.4 nm. On the other hand, the coating surfaces prepared with sol-gel coating compositions of the present invention prepared by an acrylate or methacrylate organic precursors (i.e. an organic precursor of formula (VI) or (VII)) compatible with organo-alkoxysilanes and zirconium alkoxide showed water contact angle values higher than 90°, interfacial free energy < 30 mJ/$m^2$ and Escherichia Coli CFU were totally went away after 24 h of contact according to ISO22196 standard, showing roughness values as low as nm.

Furthermore, the sol-gel coatings of the present invention have also shown excellent homogeneity and adhesion on a wide variety of substrates such as aluminium alloy, glass and plastic (for instance polyetherimide -PEI), as well as excellent corrosion protection of aluminium alloys.

Thus, the first aspect of the inventio relates to a process for preparing a sol-gel coated substrate comprising:

1) firstly, depositing a sol-gel coating composition selected from the group consisting of sol1 and sol3 over the substrate
2) secondly, curing the coating obtained in step 1);

wherein the sol1 is a sol-gel coating composition obtainable by a process which comprises:

a) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5;
optionally, at least one ($C_1$-$C_8$)alcohol;
optionally, at least one organic precursor;
optionally, at least one polymerization initiator; and
optionally, at least one functional organo-alkoxysilane or organo-halosilane having a functional organosilyl moiety selected from the group consisting of quaternary ammonium silyl, fluoro-($C_1$-$C_{20}$)alkyl silyl, ($C_1$-$C_{40}$)alkyl silyl, and a mixture thereof;
at a temperature from 15 °C to 90 °C for an appropriate period of time to obtain sol1; and
optionally ageing the resulting mixture sol1 by stirring at a temperature from 15 °C to 30 °C for a period of time from 24 h to 72 h to obtain sol1;
and

wherein the sol3 is a sol-gel coating composition obtainable by a process which comprises:

b) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5

optionally, at least one organic precursor;
optionally, at least one polymerization initiator;
optionally, at least one ($C_1$-$C_8$)alcohol; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
at a temperature from 15 °C to 90 °C to obtain sol1; and
optionally ageing the resulting mixture sol1 by stirring at a temperature from 15 °C to 30 °C from 24 h to 72 h;

c) preparing a mixture B comprising:

at least one metal alkoxide;
at least one complexing agent;
optionally, at least one acid catalyst in aqueous solution or water having a pH lower than 7;
optionally, one or more ($C_1$-$C_8$) alcohol; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof,
at a temperature from 15 °C to 30 °C for an appropriate period of time to obtain sol2; and optionally ageing the resulting mixture sol2 by stirring at a temperature from 15 °C to 30 °C from 24 h to 72 h; and

d) mixing the sol 1 with the sol 2; optionally adding to the mixture obtained in step d) at least one acid catalyst in aqueous solution or water having a pH lower than 7; and ageing the resulting mixture by stirring at a temperature from 15 °C to 30 °C from 24 h to 72 h;

with the proviso that the sol-gel coating composition of step 1) comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
or alternatively,
a process for preparing a sol-gel coated substrate comprising:

1) firstly, depositing a sol-gel coating composition selected from the group consisting of sol3 over the substrate; and
2) secondly, curing the coating obtained in step 1);

wherein the sol3 is a sol-gel coating composition obtainable by a process which comprises:

b) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5;
at least one organic precursor;
at least one polymerization initiator; and
optionally, at least one ($C_1$-$C_8$)alcohol;
at a temperature from 15 °C to 90 °C to obtain sol1; and optionally ageing the resulting mixture sol1 by stirring at a temperature from 15 °C to 90 °C from 24 h to 72 h;

c) preparing a mixture B comprising:

at least one metal alkoxide;
at least one complexing agent;
optionally one or more ($C_1$-$C_8$) alcohol; and
optionally at least one acid catalyst in aqueous solution or water having a pH lower than 7;
at a temperature from 15 °C to 30 °C to obtain sol2; optionally ageing the resulting mixture sol2 by stirring at a temperature from 15 °C to 30 °C from 24 h to 72 h; and

d) mixing the sol 1 with the sol 2; optionally adding to the mixture obtained in step d) at least one acid catalyst in aqueous solution or water having a pH lower than 7; and ageing the resulting mixture by stirring at a temperature

from 15 °C to 30 °C from 24 h to 72 h;
wherein, the organic precursor is a compound selected from the group consisting of a compound of formula (VI)

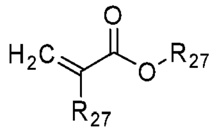

(VI)

, a compound of formula (VII)

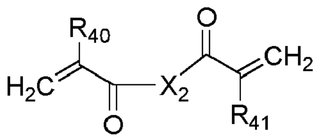

(VII)

and a mixture thereof
wherein:

$R_{27}$ are independently from ($C_1$-$C_6$)alkyl;
$R_{40}$ and $R_{41}$ are independently selected from the group consisting of H and ($C_1$-$C_6$)alkyl;
$X_2$ is selected from the group consisting of a compound of formula (VIII)

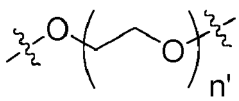

(VIII)

and a compound of formula (IX);

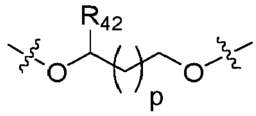

(IX)

and a mixture thereof;
wherein:

$R_{42}$ is selected from the group consisting of H and ($C_1$-$C_6$)alkyl;
p is an integer from 1 to 8; and
n' is an integer from 1 to 6.

And, the second aspect of the invention relates to a coated substrate comprising a sol-gel layer obtainable by the process as defined in the first aspect of the invention.

**Brief Description of Drawings**

Fig. 1 shows a graphical representation of contact angle and surface tension in the solid-liquid, solid-vapour,

and liquid-vapour interfaces.

**Detailed description of the invention**

All terms as used herein in this application, unless otherwise stated, shall be understood in their ordinary meaning as known in the art. More specific definitions for certain terms as used in the present application are as set forth below and are intended to apply uniformly throughout the specification and claims unless an otherwise expressly set out definition provides a broader definition.

For purposes of the present invention, the given ranges include both the lower and the upper end-points. Ranges such as temperatures, times, and the like, should be considered approximate, unless specifically stated.

For the purpose of the invention, the term "sol-gel" or "solution sol-gel" or "SG" process have the same meaning and are used interchangeably. They refer to a chemical process that is used for the synthesis of single- or multiple-component materials, including glasses, in the form of thin solid films, ultrafine powders, high surface area porous materials, dense abrasive minerals, and continuous ceramic and glass fibres. In particular, a sol-gel coating is prepared by a sol-gel process that involves the preparation of one or more precursor mixtures (also called "sol"), which is converted into intermediate product (also called "gel") and thereof into a specified material by a process that may involve chemical reactions, product forming, jellification, drying, and curing.

The term "sol" refers to either a dispersion of colloidal particles of one phase in a fluid medium or a solution prepared by hydrolysis and polycondensation of semimetal or metalorganic derivatives compounds or inorganic salts in alcoholic solution. The term "gel" refers to a material consisting of a three-dimensional network of a solid phase interwoven with an entrapped and immobilized continuous liquid phase.

The terms "percentage (%) by weight" or "% by weight" are used interchangeably and they refer to the percentage of each component in relation to the total weight of the composition.

The term "metal alkoxide" refers to a compound characterized by a metal central atom that forms covalent bonds to organic groups, but not directly to a carbon atom, though an oxygen atom instead, namely metal-oxygen-carbon bonds. The term "metal atom" refers to elements that form materials in which the valence and the conduction band is overlapped. It refers to chemical elements defined as metal in the periodic table of elements. Metallic elements are subdivided in alkali metals, alkaline earth metals, transition metals, post-transition metals, lanthanides and actinides. Examples of metals appropriate for the present invention include, without limitation, Al, Ti, Zr and Y.

The term "semimetal alkoxide" refers to a compound characterized by a semimetal central atom that forms covalent bonds to organic groups, but not directly to a carbon atom, though an oxygen atom instead, namely semimetal-oxygen-carbon bonds. The term "semimetal atom" refers to chemical elements defined as "metalloid" in the periodic table of elements. Examples of semimetals appropriate for the present invention include, without limitation, Si, Ge, B, As, Sb, Te, Po and At.

The term "organo-alkoxysilane" refers to a semimetal-organic compound in which the central atom is silicon that forms two types of covalent bonding systems. One of them is silicon-oxygen-carbon and the other is silicon-carbon.

The term "molar ratio" refers to the relation of mols between the different components of the sol-gel coating compositions.

The terms "coating" or "layer" have the same meaning and are used interchangeably. They refer to the surface that remains after the deposition of a "coating composition" directly onto the bare surface of a substrate or alternatively onto a substrate which already has one or more layers.

For the purposes of the invention the expressions "obtainable", "obtained" and equivalent expressions are used interchangeably, and in any case, the expression "obtainable" encompasses the expression "obtained".

The term "alkyl" refers to a saturated straight, or branched hydrocarbon chain which contains the number of carbon atoms specified in the description or claims. Examples include, among others, the group methyl, ethyl, propyl, isopropyl, butyl, isobutyl, sec-butyl, tert-butyl, n-pentyl, and n-hexyl.

The term "alkylene" refers to a bivalent alkyl group which contains the number of carbon atoms specified in the description or claims.

The term "alkenyl" refers to a saturated straight or branched alkyl chain which contains f the number of carbon atoms specified in the description or claims and that also contains one or more double bonds. Examples include, among others, ethenyl, 1-propen-1-yl, 1-propen-2-yl, 3-propen-1-yl, 1-buten-1-yl, 1-buten-2-yl, 3-buten-1-yl, 3-buten-2-yl, 2-buten-1-yl, 2-buten-2-yl, 2-methyl-1-propen-1-yl, 2-methyl-2-propen-1-yl, 1,3-butadien-1-yl, 1,3-butadien-2-yl, and 2-hexenyl.

The term "alkynyl" refers a saturated straight or branched alkyl chain which contains the number of carbon atoms specified in the description or claims and that also contains one or more triple bonds. Examples include, among others, ethynyl, 1-propynyl, 2-butynyl, 1,3-butadinyl, 4-pentynyl, and 1-hexynyl.

The term "aryl" refers to a membered ring, saturated, partially or totally unsaturated, optionally bridged or fused to a 5 to 6 membered ring, wherein the number of the members of the rings is that specified in the description or claims

and the members of the rings are independently selected from C, CH, $CH_2$, O, N, NH, and S; being one or more of the hydrogen atoms of the members optionally substituted by a radical selected from the group consisting of ($C_1$-$C_6$)alkyl, ($C_1$-$C_6$)alkyl-halogen, halogen, ($C_1$-$C_6$)alkyl-O, ($C_1$-$C_6$)alkyl-CO-, ($C_1$-$C_6$)alkyl-O-CO-, -$NO_2$ and -CN.

The term "polyfluoro-alkyl" refers to a saturated straight, or branched hydrocarbon wherein at least one hydrogen atom is substituted by a fluorine atom and which contains from 1 to 20 carbon atoms. Examples include, among others, the group trifluoromethyl/perfluoro methyl, perfluoro ethyl, perfluoro propyl, perfluoro isopropyl, perfluoro butyl, perfluoro isobutyl, perfluoro-sec-butyl, perfluoro-tert-butyl, perfluoro-n-pentyl, perfluoro-hexyl, perfluoro-octyl, perfluoro-dodecyl perfluoro-decyl.

The term "halogen" refers to fluorine, chlorine, bromine and iodine.

As mentioned above, an aspect of the present invention refers to a process for preparing a sol-gel coating composition useful for the preparation of a repellent coating on a substrate having durable omniphobicity and antibacterial activity over a wide range of substrates obtainable by the process of the invention.

As it is shown above, the sol-gel coating composition of the invention are useful to prepare omniphobic, repellent, antiadhesive, easy-to-clean, antifogging, anti-icing and antifouling surfaces, for having a durable low interfacial energy and non-leaching antibacterial activity also in combination with low roughness and anticorrosion properties.

For the purpose of the invention, the term "repellent" refers to a material or a coating or a surface that can repel at least a substance such as water, oil or organic solvents. The repellence capability can be measured by any method known in the state of the art. Examples of appropriate methods for determining the repellence capability include the determination of contact angle formed by a test liquid in the interface. The measurement of contact angle with more than one test liquid allows calculating the dispersive and polar components of the surface free energy by Owens-Wendt method. The total surface free energy corresponds to the sum of both components. A material can be considered repellent when shows a contact angle value > 90° for at least one test liquid. The repellence capability can also be attributed to a material with low surface free energy < 30 $mJ/m^2$.

For the purpose of the invention, the terms "omniphobic" and "multi-repellent" have the same meaning and are used interchangeable. They refer to a material or a coating or a surface that exhibit omniphobic functionality since they are able to repel substances of different nature such as water, oil and/or organic solvents.

For the purpose of the invention, the term "biocide" and "antibacterial" have the same meaning and are used interchangeable. They refer to a material, coating or surface capable of destroying a harmful organism; or counteracting, neutralizing, or avoiding the action of a harmful organism; or exercise any control over a harmful organism, by chemical or biological means.

The first alternative of the first aspect of the invention refers to a process for preparing a sol-gel coated substrate comprising:

1) firstly, depositing a sol-gel coating composition selected from the group consisting of sol1 and sol3 over the substrate
2) secondly, curing the coating obtained in step 1);

wherein the sol1 is a sol-gel coating composition obtainable by a process which comprises:

a) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5
optionally, at least one ($C_1$-$C_8$)alcohol;
optionally, at least one organic precursor;
optionally, at least one polymerization initiator; and
optionally, at least one functional organo-alkoxysilane or organo-halosilane having a functional organosilyl moiety selected from the group consisting of quaternary ammonium silyl, fluoro-($C_1$-$C_{20}$)alkyl silyl, ($C_1$-$C_{40}$)alkyl silyl, and a mixture thereof;
at a temperature from 15 °C to 90 °C for an appropriate period of time to obtain sol1; and
optionally ageing the resulting mixture sol1 by stirring at a temperature from 15 °C to 30 °C for a period of time from 24 h to 72 h to obtain sol1;
and

wherein the sol3 is a sol-gel coating composition obtainable by a process which comprises:

b) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5
optionally, at least one organic precursor;
optionally, at least one polymerization initiator;
optionally, at least one ($C_1$-$C_8$)alcohol; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
at a temperature from 15 °C to 90 °C to obtain sol1; and
optionally ageing the resulting mixture sol1 by stirring at a temperature from 15 °C to 30 °C from 24 h to 72 h;

c) preparing a mixture B comprising:

at least one metal alkoxide;
at least one complexing agent;
optionally, at least one acid catalyst in aqueous solution or water having a pH lower than 7;
optionally, one or more ($C_1$-$C_8$) alcohol; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof,
at a temperature from 15 °C to 30 °C for an appropriate period of time to obtain sol2; and optionally ageing the resulting mixture sol2 by stirring at a temperature from 15 °C to 30 °C from 24 h to 72 h; and

d) mixing the sol 1 with the sol 2; optionally adding to the mixture obtained in step d) at least one acid catalyst in aqueous solution or water having a pH lower than 7; and ageing the resulting mixture by stirring at a temperature from 15 °C to 30 °C from 24 h to 72 h;
with the proviso that the sol-gel coating composition of step 1) comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

In an embodiment, the process comprises:

1) firstly, depositing a sol-gel coating composition sol1 over the substrate; and
2) secondly, curing the coating obtained in step 1);

wherein the sol1 is a sol-gel coating composition obtainable by a process which comprises:

a) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5
optionally, at least one ($C_1$-$C_8$)alcohol;
optionally, at least one organic precursor;
optionally, at least one polymerization initiator; and
at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
at a temperature from 15 °C to 90 °C for an appropriate period of time; particularly for a period of time from 30 min to 4 h to obtain sol1; and
optionally ageing the resulting mixture sol1 by stirring at a temperature from 15 °C to 30 °C for a period of time from 24 h to 72 h to obtain ageing sol1.

In an embodiment, the process comprises depositing a sol1 sol-gel coating composition obtainable by a process which comprises:

a1) preparing a mixture A1 comprising:

at least one semimetal alkoxide;
at least one organo-alkoxysilane;
at least one acid catalyst in aqueous solution having a pH lower than 5; and
optionally at least one ($C_1$-$C_8$)alcohol; and
at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a1') mixing the semimetal alkoxide; the organo-alkoxysilane; optionally at least one ($C_1$-$C_8$)alcohol; an aqueous solution of at least one acid catalyst in aqueous solution having a pH lower than 5; and at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C for an appropriate period of time to obtain the sol1-1; and
a1") optionally ageing the resulting mixture by stirring at a temperature from 15 °C to 30 °C from 24 h to 72 h to obtain the ageing sol1-1.

In an embodiment, the process comprises depositing a sol1 sol-gel coating composition obtainable by a process which comprises:

a2) preparing a mixture A2 comprising:

at least one semimetal alkoxide;
at least one organo-alkoxysilane;
at least one acid catalyst in aqueous solution having a pH lower than 5
at least one organic precursor;
optionally, at least one polymerization initiator;
optionally, at least one ($C_1$-$C_8$)alcohol; and
at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a2') preparing a first mixture comprising the semimetal alkoxide; the organo-alkoxysilane; optionally at least one ($C_1$-$C_8$)alcohol; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a2") preparing a second mixture comprising at least one organic precursor; optionally, at least one polymerization initiator or a mixture thereof; optionally an aqueous solution of at least one acid catalyst in aqueous solution having a pH lower than 5; optionally at least one ($C_1$-$C_8$) alcohol; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a2''') mixing the second mixture and the first mixture at a temperature from 15°C to 30°C; and stirring the resulting mixture at a temperature from 15 °C to 90 °C for an appropriate period of time to obtain the sol1-2; and
a2'''') optionally ageing the resulting mixture by stirring at a temperature from 15 °C to 30 °C from 24 h to 72 h to obtain the ageing sol1-2;
which the proviso that the sol1-2 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

In an embodiment, the process comprises depositing the sol1-2 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a2'. In an embodiment, the process comprises depositing the sol1-2 as defined above

obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a2".

In an embodiment, the process comprises depositing a sol1 sol-gel coating composition obtainable by a process which comprises:

a3) preparing a mixture A3 comprising:

at least one semimetal alkoxide;
at least one organo-alkoxysilane;
at least one acid catalyst in aqueous solution having a pH lower than 5
at least one organic precursor;
optionally, at least one polymerization initiator;
at least one ($C_1$-$C_8$)alcohol; and
at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a3') preparing a first mixture comprising the organo-alkoxysilane; optionally at least one ($C_1$-$C_8$)alcohol; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a3") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl;
a3''') adding at least one semimetal alkoxide; and stirring the resulting mixture at a temperature from 15 °C to 90 °C for an appropriate period of time;
a3'''') preparing a second mixture comprising at least one organic precursor; optionally, at least one polymerization initiator; optionally at least one ($C_1$-$C_8$)alcohol; optionally, an aqueous solution of at least one acid catalyst in aqueous solution having a pH lower than 5; or a mixture thereof; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a3$^{v}$) mixing the second mixture with the mixture obtained in step a3'''') at a temperature from 15 °C to 90 °C to obtain the sol1-3; and
a3$^{vi}$) optionally ageing the resulting mixture by stirring at a temperature from 15 °C to 30 °C from 24 h to 72 h to obtain the ageing sol1-3.

which the proviso that the sol1-3 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

In an embodiment, the process comprises depositing the sol1-3 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a3'). In an embodiment, the process comprises depositing the sol1-3 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a3"). In an embodiment, the process comprises depositing the sol1-3 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a3'''').

In an embodiment, the process comprises depositing a sol1 sol-gel coating composition obtainable by a process which comprises:

a4) preparing a mixture A4 comprising:

at least one organo-alkoxysilane;
at least one acid catalyst in aqueous solution having a pH lower than 5
at least one organic precursor;
optionally, at least one polymerization initiator; and
at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a4') preparing a first mixture comprising the organo-alkoxysilane; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a4") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C; and stirring the resulting mixture at a temperature from 15 °C to 90 °C; and
a4''') preparing a second mixture comprising at least one organic precursor; optionally, at least one polymerization initiator or a mixture thereof; optionally, an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a4'''') mixing the second mixture with the mixture obtained in step a4''') and stirring at a temperature from 15 °C to 90 °C to obtain the sol1-4; and
a4$^{v}$) optionally ageing the resulting mixture by stirring at a temperature from 15 °C to 30 °C from 24 h to 72 h to obtain the ageing sol1-4;

which the proviso that the sol1-4 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

In an embodiment, the process comprises depositing the sol1-4 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a4'). In an embodiment, the process comprises depositing the sol1-4 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a4"). In an embodiment, the process comprises depositing the sol1-4 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a4''').

In an embodiment, the process comprises depositing a sol1 sol-gel coating composition obtainable by a process which comprises:

a5) preparing a mixture A5 comprising:

at least one semimetal alkoxide;
at least one organo-alkoxysilane;
at least one acid catalyst in aqueous solution having a pH lower than 5
at least one organic precursor;
optionally, at least one polymerization initiator; and
at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a5') preparing a first mixture comprising the organo-alkoxysilane; an aqueous solution of at least one acid catalyst

in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a5") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a5''') adding at least one semimetal alkoxide at a temperature from 15 °C to 30 °C;
a5'''') mixing the resulting mixture at a temperature from 15 °C to 90 °C; and stirring the resulting mixture at a temperature from 15 °C to 90 °C; and
a5$^{v}$) preparing a second mixture comprising at least one organic precursor; optionally, at least one polymerization initiator or a mixture thereof; optionally, one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a5$^{vi}$) mixing the second mixture with the mixture obtained in step a5''') at a temperature from 15 °C to 90 °C to obtain the sol1-5; and
a5$^{vii}$) optionally ageing the resulting mixture by stirring at a temperature from 15 °C to 30 °C from 24 h to 72 h to obtain the ageing sol1-5; and

which the proviso that the sol1-5 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

In an embodiment, the process comprises depositing the sol1-5 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a5'). In an embodiment, the process comprises depositing the sol1-4 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a5"). In an embodiment, the process comprises depositing the sol1-4 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in step a5$^{v}$).

In an embodiment, the process comprises depositing a sol3 sol-gel coating composition obtainable by a process which comprises:

1) firstly, depositing a sol-gel coating composition sol3 over the substrate; and
2) secondly, curing the coating obtained in step 1);

wherein the sol3 is a sol-gel coating composition obtainable by a process which comprises:

b) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5;
at least one organic precursor;
optionally, at least one polymerization initiator;
optionally, at least one ($C_1$-$C_8$)alcohol; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
at a temperature from 15 °C to 90 °C to obtain sol1; and
optionally ageing the resulting mixture sol1 by stirring at a temperature from 15 °C to 30 °C from 24 h to 72 h;

c) preparing a mixture B comprising:

at least one metal alkoxide;
at least one complexing agent;

optionally one or more ($C_1$-$C_8$) alcohol; and

optionally at least one acid catalyst in aqueous solution or water having a pH lower than 7;

optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof,

at a temperature from 15 °C to 30 °C to obtain sol2; optionally ageing the resulting mixture sol2 by stirring at a temperature from 15 °C to 30 °C from 24 h to 72 h; and

d) mixing the sol 1 with the sol 2; optionally adding to the mixture obtained in step d) at least one acid catalyst in aqueous solution or water having a pH lower than 7; and ageing the resulting mixture by stirring at a temperature from 15 °C to 30 °C from 24 h to 72 h;

with the proviso that the sol3 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

In an embodiment, the process comprises depositing the sol3 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in sol1.

In an embodiment, the process comprises depositing the sol3 as defined above obtainable by a process wherein the at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof is present in sol2.

In an embodiment, the process comprises depositing the sol3 as defined above obtainable by a process which comprises:

b) preparing a sol1 selected from the group consisting of sol1-1, sol1-2, sol1-3, sol1-4, sol1-5, ageing sol1-1, ageing sol1-2, ageing sol1-3, ageing sol1-4 and ageing sol1-5 as defined above;

c) preparing a sol2 by preparing a mixture B by mixing at least one metal alkoxide; at least one complexing agent; optionally one or more ($C_1$-$C_8$) alcohol; optionally, at least one acid catalyst in aqueous solution or water having a pH lower than 7; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof, at a temperature from 15 °C to 90 °C to obtain sol2; optionally ageing the resulting mixture sol2 by stirring at a temperature from 15 °C to 30 °C from 24 h to 72 h to obtain ageing sol2; and

d) mixing the sol 1 with the sol 2, optionally adding to the mixture obtained in step d) at least one acid catalyst in aqueous solution or water having a pH lower than 7; and ageing the resulting mixture by stirring at a temperature from 15 °C to 30 °C from 24 h to 72 h to obtain sol3 selected from the group consisting of sol3-1, sol3-1, sol3-2, sol3-3, sol3-4, sol3-5, ageing sol3-1, ageing sol3-2, ageing sol3-3, ageing sol3-4 and ageing sol3-5, respectively.

In an embodiment, the process comprises depositing the sol3 as defined above obtainable by a process wherein when the sol1 is a sol1-1, then sol1-1 is obtainable by a process wherein step a1') mixing the semimetal alkoxide; the organo-alkoxysilane; optionally at least one ($C_1$-$C_8$)alcohol; an aqueous solution of at least one acid catalyst in aqueous solution having a pH lower than 5; and at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C for an appropriate period of time to obtain the sol1-1; and a1") optionally ageing the resulting mixture by stirring at a temperature from 15 °C to 30 °C from 24 h to 72 h.

In an embodiment, the process comprises depositing the sol3 as defined above obtainable by a process wherein when the sol1 is a sol1-2, then sol1-2 is obtainable by a process wherein step a2') preparing a first mixture comprising the semimetal alkoxide; the organo-alkoxysilane; at least one ($C_1$-$C_8$)alcohol; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C; a2") preparing a second mixture comprising at least one organic precursor; at least one polymerization initiator or a mixture thereof; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C; a2''') mixing the second mixture and the first mixture at a temperature from 15°C to 30°C; and stirring the resulting mixture at a temperature from 15 °C to 90 °C for an appropriate period of time to obtain the sol1-2; and a2'''') optionally ageing the resulting mixture by stirring at a temperature

from 15 °C to 30 °C from 24 h to 72 h.

In an embodiment, the process comprises depositing the sol3 as defined above obtainable by a process wherein when the sol1 is a sol1-3, then sol1-3 is obtainable by a process wherein step a3') preparing a first mixture comprising the organo-alkoxysilane; optionally at least one ($C_1$-$C_8$)alcohol; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;

a3") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl at a temperature from 15 °C to 30 °C;
a3''') adding at least one semimetal alkoxide at a temperature from 15 °C to 30 °C;
a3''''v) preparing a second mixture comprising at least one organic precursor; optionally, at least one polymerization initiator; optionally, an aqueous solution of at least one acid catalyst in aqueous solution having a pH lower than 5; or a mixture thereof; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a3$^{v}$) mixing the second mixture with the mixture obtained in step a3''') at a temperature from 15 °C to 30 °C to obtain the sol1-3; and
a3$^{vi}$) optionally ageing the resulting mixture by stirring at a temperature from 15 °C to 30 °C from 24 h to 72 h.

In an embodiment, the process comprises depositing the sol3 as defined above obtainable by a process wherein when the sol1 is a sol1-4, then sol1-4 is obtainable by a process wherein step a4') preparing a first mixture comprising the organo-alkoxysilane; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;

a4") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C; and stirring the resulting mixture at a temperature from 15 °C to 90 °C; and
a4''') preparing a second mixture comprising at least one organic precursor; optionally, at least one polymerization initiator or a mixture thereof; optionally, an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a4'''') mixing the second mixture with the mixture obtained in step a4''') and stirring at a temperature from 15 °C to 90 °C to obtain the sol1-4; and
a4$^{v}$) optionally ageing the resulting mixture by stirring at a temperature from 15 °C to 30 °C from 24 h to 72 h.

In an embodiment, the process comprises depositing the sol3 as defined above obtainable by a process wherein when the sol1 is a sol1-5, then sol1-5 is obtainable by a process wherein stepa5') preparing a first mixture comprising the organo-alkoxysilane; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;

a5") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a5''') adding at least one semimetal alkoxide at a temperature from 15 °C to 30 °C;
a5'''') mixing the resulting mixture at a temperature from 15 °C to 90 °C; and stirring the resulting mixture at a temperature from 15 °C to 90 °C; and
a5$^{v}$) preparing a second mixture comprising at least one organic precursor; optionally, at least one polymerization initiator or a mixture thereof; optionally, one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a

mixture thereof at a temperature from 15 °C to 30 °C;

a5[vi]) mixing the second mixture with the mixture obtained in step a5'''') at a temperature from 15 °C to 90 °C to obtain the sol1-5; and

a5[vii]) optionally ageing the resulting mixture by stirring at a temperature from 15 °C to 30 °C from 24 h to 72 h.

As it is mentioned above, the first alternative process of the first aspect of the invention comprises depositing a sol-gel coating composition comprising at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

The term "functional organo-alkoxysilane" refers to a compound consisting of a silicon central atom containing some functional organic moiety directly bonded to a carbon and some organic groups not directly bonded to carbon, though an oxygen atom instead, thus alkoxy groups. The functional organic moiety adds new functionality to a final formed material, such as hydrophobicity, oleophobicity or biocidal action.

The term "functional organo-halosilane" refers to a compound consisting of a silicon central atom containing some functional organic moiety directly bonded to a carbon and some direct bonds to halogen atoms. The functional organic moiety adds new functionality to a final formed material, such as hydrophobicity, oleophobicity or biocidal action.

The term "functional organosilyl moiety" refers to an organic moiety containing a carbon to silicon bond. The functional organic moiety adds new functionality to a final formed material, such as hydrophobicity, oleophobicity or biocidal action.

In an embodiment, the process comprises depositing a sol-gel coating composition comprising at least one functional organo-alkoxysilane or organo-halosilane having a functional organosilyl moiety selected from the group consisting of: quaternary ammonium silyl, polyfluoro-($C_1$-$C_{20}$)alkyl silyl, ($C_1$-$C_{40}$)alkyl silyl, which is selected from the group consisting of: one or more quaternary ammonium alkoxysilanes; one or more quaternary ammonium halosilanes; one or more polyfluoro-($C_1$-$C_{20}$)alkyl alkoxysilanes; one or more polyfluoro-($C_1$-$C_{20}$) halosilanes; one or more ($C_1$-$C_{40}$)alkyl alkoxysilanes; one or more ($C_1$-$C_{40}$)alkyl halosilanes; a mixture of one or more quaternary ammonium alkoxysilane and one or more polyfluoro-($C_1$-$C_{20}$)alkyl alkoxysilanes; a mixture of one or more quaternary ammonium alkoxysilane and one or more polyfluoro-($C_1$-$C_{20}$) halosilanes; a mixture of one or more quaternary ammonium halosilanes and one or more polyfluoro-($C_1$-$C_{20}$)alkyl alkoxysilanes; a mixture of one or more polyfluoro-($C_1$-$C_{20}$)alkyl alkoxysilanes and one or more ($C_1$-$C_{40}$)alkyl alkoxysilane; a mixture of one or more polyfluoro-($C_1$-$C_{20}$)alkyl alkoxysilanes and one or more ($C_1$-$C_{40}$)alkyl halosilanes; a mixture of one or more polyfluoro-($C_1$-$C_{20}$) halosilanes and one or more ($C_1$-$C_{40}$)alkyl alkoxysilane; a mixture of one or more polyfluoro-($C_1$-$C_{20}$) halosilanes and one or more ($C_1$-$C_{40}$)alkyl halosilanes; a mixture of one or more quaternary ammonium alkoxysilane and one or more ($C_1$-$C_{40}$)alkyl alkoxysilane; a mixture of one or more quaternary ammonium alkoxysilane and one or more ($C_1$-$C_{40}$)alkyl halosilanes; a mixture of one or more quaternary ammonium halosilanes and one or more ($C_1$-$C_{40}$)alkyl alkoxysilane; a mixture of one or more quaternary ammonium alkoxysilane, one or more polyfluoro-($C_1$-$C_{20}$)alkyl alkoxysilane and one or more ($C_1$-$C_{40}$)alkyl alkoxysilane; a mixture of one or more quaternary ammonium alkoxysilane, one or more polyfluoro-($C_1$-$C_{20}$) halosilanes and one or more ($C_1$-$C_{40}$)alkyl alkoxysilane; a mixture of one or more quaternary ammonium alkoxysilane, one or more polyfluoro-($C_1$-$C_{20}$)alkyl alkoxysilane and one or more ($C_1$-$C_{40}$)alkyl halosilanes; a mixture of one or more quaternary ammonium alkoxysilane, one or more polyfluoro-($C_1$-$C_{20}$) halosilanes and one or more ($C_1$-$C_{40}$)alkyl halosilanes; and a mixture of one or more quaternary ammonium halosilanes, one or more polyfluoro-($C_1$-$C_{20}$)alkyl silane and one or more ($C_1$-$C_{40}$)alkyl alkoxysilane.

In an embodiment, the process comprises depositing a sol-gel coating composition comprising at least one functional organo-alkoxysilane or organo-halosilane having a quaternary ammonium silyl as a functional organosilyl moiety, thereby being a quaternary ammonium alkoxysilane or a quaternary ammonium halosilane. For the purpose of the invention, the term functional organo-alkoxysilane or organo-halosilane having a quaternary ammonium silyl as a functional organosilyl moiety refers to a quaternary ammonium alkoxysilane or a quaternary ammonium halosilane. The terms "quaternary ammonium silane" and "silylated quaternary ammonium salt" have the same meaning and are used interchangeable. Particularly, the "quaternary ammonium alkoxysilane" refers to a salt consisting of a cation formed by a silicon central atom containing i) a quaternary ammonium moiety linked to Si by an alkyl chain and ii) alkyl groups linked to Si by an oxygen atom, thus Si-O-C, thus forming alkoxy groups; in combination with an halide anion; and the term "quaternary ammonium halosilane" refers to a salt consisting of a cation formed by a silicon central atom containing i) a quaternary ammonium moiety linked to Si by an alkyl chain and ii) direct bonds between Si to halogen atoms, Si-X; in combination with an halide anion.

In an embodiment, the process comprises depositing a sol-gel coating composition comprising at least one quaternary ammonium alkoxysilane of formula (XIV)

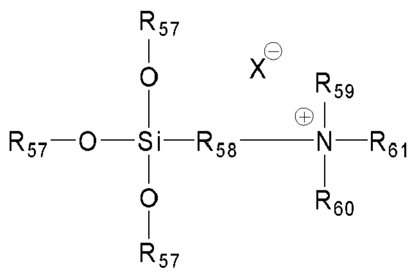

(XIV)

wherein X is an halogen selected from the group consisting of chlorine, bromine and iodine; each $R^{57}$ is independently a $(C_1\text{-}C_6)$alkyl, particularly selected form methyl, ethyl, n-propyl, isopropyl and butyl; $R^{58}$ is a $(C_1\text{-}C_{20})$alkylene, $R^{59}$ is $(C_1\text{-}C_{20})$alkyl, $R^{60}$ is $(C_1\text{-}C_{20})$alkyl and $R^{61}$ is $(C_1\text{-}C_{20})$alkyl.

In an embodiment, the process comprises depositing a sol-gel coating composition comprising at least one quaternary ammonium alkoxysilane selected from the group consisting of dimethyl octadecyl[-3-(trimethoxy silyl)propyl] ammonium chloride, dimethyl octadecyl[-3-(triethoxy silyl)propyl]ammonium chloride, diethyl octadecyl[-3-(trimethoxy silyl)propyl]ammonium chloride, dimethyl octadecyl[-3-(trimethoxy silyl)propyl]ammonium fluoride, dimethyl tetradecyl (3-trimethoxysilylpropyl)ammonium chloride, dimethyl tetradecyl (3-triethoxysilylpropyl)ammonium chloride, dimethyl hexadecyl[-3-(trimethoxy silyl)propyl]ammonium chloride, dimethyl hexadecyl[-3-(triethoxy silyl)propyl]ammonium chloride and a mixture thereof. In an embodiment, the process comprises depositing a sol-gel coating composition comprising at least one quaternary ammonium alkoxysilane or a quaternary ammonium halosilane is dimethyl octadecyl[3-(trimethoxysilyl) propyl] ammonium chloride.

In an embodiment, the process comprises depositing a sol-gel coating composition comprising at least one functional organo-alkoxysilane or organo-halosilane having a polyfluoro-$(C_1\text{-}C_{20})$alkyl silyl as a functional organosilyl moiety, thereby being polyfluoro-$(C_1\text{-}C_{20})$alkyl alkoxysilanes or a polyfluoro-$(C_1\text{-}C_{20})$ halosilanes; particularly a polyfluoro-$(C_1\text{-}C_{12})$alkyl alkoxysilane or a polyfluoro-$(C_1\text{-}C_{12})$alkyl halosilane. For the purpose of the invention, the term polyfluoro-$(C_1\text{-}C_{20})$alkyl alkoxysilane" refers to a compound formed by silicon central atom containing some polyfluoroalkyl moiety linked to Si by an alkyl (or polyfluoroalkyl) chain and some alkyl groups linked to Si by an oxygen atom, thus Si-O-C, thus forming alkoxy groups; and the term "polyfluoro-$(C_1\text{-}C_{20})$ halosilane" refers to a compound formed by silicon central atom containing some polyfluoroalkyl moiety linked to Si by an alkyl (or polyfluoroalkyl) chain and some halogen atoms linked to Si by a Si-X bond.

In an embodiment, the process comprises depositing a sol-gel coating composition comprising at least one polyfluoro-$(C_1\text{-}C_{20})$alkyl alkoxysilane or a polyfluoro-$(C_1\text{-}C_{20})$alkyl halosilane selected from the group consisting of a compound of formula (XV)

$$[CF_3\text{-}(CF_2)_v(CH_2)_u]_w\text{-}Si(OR^{47})_y \qquad (XV)$$

wherein each $R^{47}$ is independently $(C_1\text{-}C_{20})$alkyl; u and v are independently an integer from 0 to 20, w is an integer selected from 1, 2 and 3; y is an integer selected from 1, 2, and 3; and the sum of w+y is 4;
and a compound of formula (XVI)

$$[CF_3\text{-}(CF_2)_v(CH_2)_u]_w\text{-}SiX_y \qquad (XVI)$$

wherein each X is independently an halogen independently selected from the group consisting of chlorine, bromine and iodine; u and v are independently an integer from 0 to 20, w is an integer selected from 1, 2 and 3; y is an integer selected from 1, 2, and 3; and the sum of w+y is 4.

In an embodiment, the process comprises depositing a sol-gel coating composition comprising at least one polyfluoro-$(C_1\text{-}C_{20})$alkyl alkoxysilane or a polyfluoro-$(C_1\text{-}C_{20})$alkyl halosilane, selected from the group consisting of a compound of formula (XV-A):

$$CF_3\text{-}(CF_2)_v(CH_2)_u\text{-}Si(OR^{48})(OR^{49})(OR^{50}) \qquad (XV\text{-}A)$$

wherein: each one of $R^{48}$, $R^{49}$ and $R^{50}$ are independently selected from the group consisting of a substituted or unsubstituted $(C_1\text{-}C_{14})$alkyl and u and v are independently an integer from 0 to 20;
and a compound of formula (XVI-A)

$CF_3-(CF_2)_v(CH_2)_u-SiX_3$ (XVI-A)

wherein X is a halogen independently selected from the group consisting of chlorine, bromine and iodine; preferably chlorine; and u and v are independently an integer from 0 to 20.

In an embodiment, the process comprises depositing a sol-gel coating composition comprising at least one polyfluoro-($C_1$-$C_{20}$)alkyl alkoxysilane or a polyfluoro-($C_1$-$C_{20}$)alkyl halosilane selected from the group consisting of (1H,1H,2H,2H-perfluorododec-1-yl) triethoxy silane (1H,1H,2H,2H-perfluorododecyl) trimethoxy silane, (1H,1H,2H,2H-perfluorodecyl) triethoxy silane (FAS17), (1H,1H,2H,2H-perfluorodecyl) trimethoxy silane, (1H,1H,2H,2H-perfluorooctyl) triethoxy silane (FAS13), (1H,1H,2H,2H-perfluorooctyl) trimethoxy silane (3,3,3-trifluoropropyl) triethoxy silane, (3,3,3-trifluoropropyl) trimethoxy silane; preferably (1H,1H,2H,2H-perfluorodecyl) triethoxy silane, 1H,1H,2H,2H-perfluorododecyltrichlorosilane, 1H,1H,2H,2H-perfluorodecyltrichlorosilane, 1H,1H,2H,2H-perfluorooctyltrichlorosilane, and trichloro(3,3,3-trifluoropropyl)silane; preferably 1H,1H,2H,2H-perfluorodecyltrichlorosilane and a mixture thereof. In an embodiment, the process comprises depositing a sol-gel coating composition comprising at least one polyfluoro-($C_1$-$C_{20}$)alkyl alkoxysilane or a polyfluoro-($C_1$-$C_{20}$)alkyl halosilane is (1H,1H,2H,2H-perfluorodecyl) triethoxy silane (FAS17).

In an embodiment, the process comprises depositing a sol-gel coating composition comprising at least one functional organo-alkoxysilane or organo-halosilane having a ($C_1$-$C_{40}$)alkyl silyl as a functional organosilyl moiety, thereby being a ($C_1$-$C_{40}$)alkyl alkoxysilanes or a ($C_1$-$C_{40}$)alkyl halosilanes. For the purpose of the invention, the term "($C_1$-$C_{40}$)alkyl alkoxysilane" refers to a compound formed by silicon central atom containing some alkyl moiety directly linked to Si, thus a Si-C bond, and some alkyl groups linked to Si by an oxygen atom, thus Si-O-C, thus forming alkoxy groups; and the term "($C_1$-$C_{40}$)alkyl halosilane" refers to a compound formed by silicon central atom containing some alkyl moiety directly linked to Si, thus a Si-C bond, and some halogen atoms linked to Si by a Si-X bond.

In an embodiment, the process comprises depositing a sol-gel coating composition comprising at least one ($C_1$-$C_{40}$)alkyl alkoxysilanes or a ($C_1$-$C_{40}$)alkyl halosilanes selected from the group consisting of a compound of formula (XVII)

$(R^{51})_aSi(OR^{52})_b$ (XVII)

wherein each $R^{51}$ is independently a ($C_1$-$C_{40}$)alkyl; each $R^{52}$ is independently a ($C_1$-$C_{20}$)alkyl; w is an integer selected from 1, 2 and 3; y is an integer selected from 1, 2, and 3; and the sum of w+y is 4;
and a compound of formula (XVII)

$[CH_3-(CH_2)_u]_w-SiX_y$ (XVIII)

wherein each X is an halogen independently selected from the group consisting of chlorine, bromine and iodine; u is an integer from 0 to 40, w is an integer selected from 1, 2 and 3; y is an integer selected from 1, 2, and 3; and the sum of w+y is 4.

In an embodiment, the process comprises depositing a sol-gel coating composition comprising at least one ($C_1$-$C_{40}$)alkyl alkoxysilanes or a ($C_1$-$C_{40}$)alkyl halosilanes selected from the group consisting of a compound of formula (XVII-A)

$R^{53}Si(OR^{54})(OR^{55})(OR^{56})$ (XVII-A)

wherein each $R^{53}$ is independently a ($C_1$-$C_{40}$)alkyl; each $R^{54}$, $R^{55}$ and $R^{55}$ are independently a ($C_1$-$C_{20}$)alkyl;
and a compound of formula (XVIII-A)

$CH_3-(CH_2)_u-SiX_3$ (XVIII-A)

wherein X is an halogen independently selected from the group consisting of chlorine, bromine and iodine; preferably chlorine and u is an integer from 0 to 40.

In an embodiment, the process comprises depositing a sol-gel coating composition comprising at least one ($C_1$-$C_{40}$)alkyl alkoxysilanes or a ($C_1$-$C_{40}$)alkyl halosilanes selected from the group consisting of n-octadecyltriethoxysilane, n-octadecyltrimethoxysilane, n-hexadecyltriethoxysilane, n-hexadecyltrimethoxysilane, n-dodecyltriethoxysilane (C12), n-dodecyltrimethoxysilane, n-octyltriethoxysilane and n-octyltrimethoxysilane; preferably n-dodecyltriethoxysilane (C12), , of n-octadecyltrichlorosilane, n-hexadecyltrichlorosilane, n-dodecyltrichlorosilane (C12), n- n-octyltriethoxysilane and n-octyltrimchlorosilane;; preferably n-octadecyltrichlorosilane and a mixture thereof. In an embodiment, the process comprises depositing a sol-gel coating composition comprising at least one ($C_1$-$C_{40}$)alkyl alkoxysilane or a ($C_1$-$C_{40}$)alkyl halosilane is n-dodecyltriethoxysilane (C12).

In an embodiment, the process comprises depositing a sol-gel coating composition comprising a mixture selected from the group consisting of (1H,1H,2H,2H-perfluorodecyl) triethoxy silane (FAS17) and dimethyl octadecyl[3-(trimethoxysilyl) propyl] ammonium chloride; and (1H,1H,2H,2H-perfluorodecyl) triethoxy silane (FAS17) and n-dodecyltriethoxysilane (C12).

In an embodiment, the process comprises depositing a sol-gel coating composition comprising at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof in a molar ratio between it and the organo-silicon alkoxide from 0.001 to 2 moles for one mole of the organo-silicon alkoxide. In an embodiment, the process comprises depositing a sol-gel coating composition comprising at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof in a molar ratio between it and the organo-silicon alkoxide from 0.01 to 0.5 moles for one mole of the organo-silicon alkoxide.

In an embodiment, the process comprises depositing a sol-gel coating composition comprising a mixture of one or more quaternary ammonium alkoxysilane and one or more polyfluoro-($C_1$-$C_{20}$)alkyl alkoxysilanes as defined in the present invention, wherein the molar ratio between them is from 1:0.1 to 1:10 (i.e. from 0.1 to 10 moles of polyfluoro-($C_1$-$C_{20}$)alkyl alkoxysilanes for one mole of quaternary ammonium alkoxysilane). In an embodiment, the process comprises depositing a sol-gel coating composition comprising a mixture of one or more quaternary ammonium alkoxysilanes and one or more polyfluoro-($C_1$-$C_{20}$)alkyl halosilanes as defined in the present invention, wherein the molar ratio between them is from 1:0.1 to 1:10. In an embodiment, the process comprises depositing a sol-gel coating composition comprising a mixture of one or more polyfluoro-($C_1$-$C_{20}$)alkyl alkoxysilanes and one or more ($C_1$-$C_{40}$)alkyl alkoxysilane as defined in the present invention, wherein the molar ratio between them is from 1:0.1 to 1:10. In an embodiment, the process comprises depositing a sol-gel coating composition comprising a mixture of one or more quaternary ammonium alkoxysilane and one or more ($C_1$-$C_{40}$)alkyl alkoxysilane as defined in the present invention, wherein the molar ratio between them is from 1:0.1 to 1:10. In an embodiment, the process comprises depositing a sol-gel coating composition comprising a mixture of one or more quaternary ammonium alkoxysilanes and one or more ($C_1$-$C_{40}$)alkyl halosilane as defined in the present invention, wherein the molar ratio between them is from 1:0.1 to 1:10. In an embodiment, the process comprises depositing a sol-gel coating composition comprising a mixture of one or more quaternary ammonium alkoxysilane, one or more polyfluoro-($C_1$-$C_{20}$)alkyl silane and one or more ($C_1$-$C_{40}$)alkyl alkoxysilane as defined in the present invention, wherein the molar ratio between them is from 1:0.1:0.1 to 1:10:10. In an embodiment, the process comprises depositing a sol-gel coating composition comprising a mixture of one or more quaternary ammonium alkoxysilanes, one or more polyfluoro-($C_1$-$C_{20}$)halosilane and one or more ($C_1$-$C_{40}$)alkyl halosilane as defined in the present invention, wherein the molar ratio between them is from 1:0.1:0.1 to 1:10:10.

In an embodiment, the process comprises depositing a sol-gel coating composition comprising an organo-alkoxysilane selected from the group consisting of:

a compound of formula (I);

$$[R^4]_s\text{-Si}(OR^1)_t(OR^2)(OR^3) \qquad (I)$$

a compound of formula (II);

$$[R^8\text{-}(CH_2)_m]\text{-Si}(OR^5)_qR^6_r \qquad (II)$$

a compound of formula (III)

$$(^9RO)(^{10}Ra)(^{11}RO)\text{Si-}X_1\text{-Si}(OR^{12})(OR^{13})(OR^{14}) \qquad (III)$$

a mixture of at least a compound of formula (I) wherein $R^4$ is ($C_1$-$C_4$)alkenyl and at least a compound of formula (I) wherein $R^4$ is ($C_2$-$C_{20}$)alkyl-CH=CH-;
a mixture of at least a compound of formula (I) and at least a compound of formula (II);
a mixture of at least a compound of formula (I) and at least a compound of formula (III);
a mixture of at least a compound of formula (II) and at least a compound of formula (III);

wherein:

each one of $R^1$, $R^2$ and $R^3$ are independently a substituted or un-substituted ($C_1$-$C_{14}$)alkyl;
$R^4$ is selected from the group consisting of a substituted or un-substituted ($C_2$-$C_{14}$)alkenyl, ($C_5$-$C_6$)aryl, ($C_2$-$C_{14}$)alkynyl; and ($C_2$-$C_{20}$)alkyl-CH=CH-;

$R^5$, $R^6$, $R^9$, $R^{10}$, $R^{11}$, $R^{12}$, $R^{13}$ and $R^{14}$ are independently selected from the group consisting of a substituted or un-substituted $(C_1\text{-}C_{14})$alkyl, $(C_5\text{-}C_6)$aryl, $(C_2\text{-}C_{14})$alkenyl, and $(C_2\text{-}C_{14})$alkyl-CH=CH-;
$R^8$ is selected from the group consisting of H, -SH, substituted or un-substituted $(C_1\text{-}C_{12})$alkyl, substituted or un-substituted $(C_5\text{-}C_6)$aryl, $-(CF_2)_b\text{-}CF_3$, $-NR^{15}R^{16}$, a compound of formula (IV)

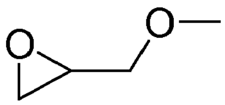

(IV)

and a compound of formula (V)

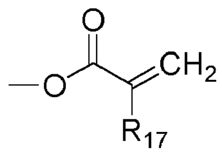

(V)

$R^{15}$ and $R^{16}$ are independently selected from the group consisting of H, substituted or un-substituted $(C_1\text{-}C_{12})$alkyl, -CO, and substituted or un-substituted $(C_5\text{-}C_6)$aryl;
$R^{17}$ is selected from the group consisting of H and substituted or un-substituted $(C_1\text{-}C_{12})$alkyl;
$X_1$ is selected from the group consisting of substituted or unsubstituted $-(C_1\text{-}C_{12})$alkylene-, $-(C_1\text{-}C_{12})$alkylene-NH-$(C_1\text{-}C_{12})$alkylene-, and $-(C_1\text{-}C_{12})$alkylene-$(S)_{n}$-$(C_1\text{-}C_{12})$alkylene-;
m is an integer from 0 to 20;
n is an integer from 1 to 4;
q is an integer from 2 to 3;
r is an integer from 0 to 1;
s is an integer from 1 to 2;
t is an integer from 0 to 1;
the sum of q + r is 3;
the sum of s + t is 2; and
b is an integer from 0 to 12.

In an embodiment, the process comprises depositing a sol-gel coating composition comprising an organo-alkoxysilane of formula (I) as defined above. In an embodiment, the process comprises depositing a sol-gel coating composition comprising an organo-alkoxysilane of formula (I) selected from the group consisting of vinyltriethoxysilane (VTES), vinyltrimethoxysilane (VTMS), allyltriethoxysilane, allyltrimethoxysilane, isopropenyltriethoxysilane, isopropenyltrimethoxysilane, phenyltriethoxysilane, phenyltrimethoxysilane, (2-phenylethyl)triethoxysilane, (2-phenylethyl)trimethoxysilane and a mixture thereof.

In an embodiment, the process comprises depositing a sol-gel coating composition comprising an organo-alkoxysilane of formula (II) as defined above. In an embodiment, the process comprises depositing a sol-gel coating composition comprising an organo-alkoxysilane of formula (II) selected from the group consisting of (3-glycidyloxypropyl)trimethoxy silane (GPTMS), (3-glycidyloxypropyl)triethoxysilane (GPTES), (3-glycidoxypropyl)dimethoxymethylsilane, [3-(methacryloyloxy)propyl]trimethoxysilane (MAPTMS), [3-(methacryloyloxy)propyl]triethoxysilane (MAPTES), [3-(phenylamino)propyl]trimethoxy silane (PAPTMS), [3-(phenylamino)propyl]triethoxy silane (PAPTES), (3-mercaptopropyl)trimethoxy silane (MPTMS), (3-mercaptopropyl)triethoxy silane (MPTES), (3-isocyanatopropyl)triethoxysilane (ICPTES), 1-[3-(trimethoxy silyl)propyl]ureido (UPS) and a mixture thereof.

In an embodiment, the process comprises depositing a sol-gel coating composition comprising an organo-alkoxysilane of formula (III) as defined above. In an embodiment, the process comprises depositing a sol-gel coating composition comprising an organo-alkoxysilane of formula (III) selected from the group consisting of bis-silylfunctional precursors, bis-[triethoxysilylpropyl] tetrasulfide silane (BTESTP) and bis-1,2(triethoxysilyl)ethane (BTSE) bis-[3-(trimethoxysilyl)propyl]amine.

In an embodiment, the process comprises depositing a sol-gel coating composition comprising [3-(methacryloyloxy)propyl]trimethoxysilane (MAPTMS), [3-(methacryloyloxy)propyl]triethoxysilane (MAPTES), (3-glycidyloxypropyl)triethoxy silane (GPTES) or (3-glycidyloxypropyl)trimethoxy silane (GPTMS) as organo-alkoxysilane.

In an embodiment, the process comprises depositing a sol-gel coating composition comprising an organic precursor selected from the group consisting of:

compound of formula (VI)

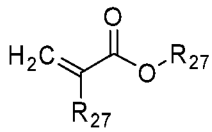

(VI)

, a compound of formula (VII)

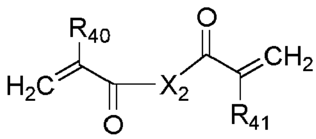

(VII)

and a mixture thereof

wherein:

$R_{27}$ are independently from $(C_1\text{-}C_6)$alkyl;
$R_{40}$ and $R_{41}$ are independently selected from the group consisting of H and $(C_1\text{-}C_6)$alkyl;
$X_2$ is selected from the group consisting of a compound of formula (VIII)

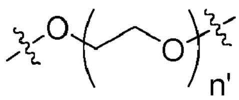

(VIII)

and a compound of formula (IX);

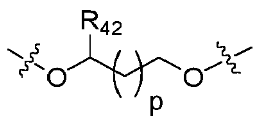

(IX)

and a mixture thereof;

wherein:

$R_{42}$ is selected from the group consisting of H and $(C_1\text{-}C_6)$alkyl;
p is an integer from 1 to 8; and
n' is an integer from 1 to 6.

In an embodiment, the process comprises depositing a sol-gel coating composition comprising an organic

precursor of formula (VI)

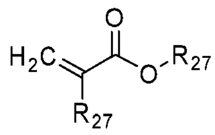

(VI)

wherein $R_{27}$ are independently from ($C_1$-$C_6$)alkyl.

In an embodiment, the process comprises depositing a sol-gel coating composition comprising an organic precursor of formula (VI) wherein all $R_{27}$ are methyl.

In an embodiment, the process comprises depositing a sol-gel coating composition comprising an organic precursor of formula (VI) selected from the group consisting of methyl methacrylate, ethyl methacrylate and propyl methacrylate.

In an embodiment, the process comprises depositing a sol-gel coating composition comprising an organic precursor of formula (VII)

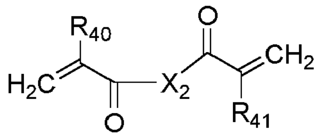

(VII)

wherein:

$R_{40}$ and $R_{41}$ are independently selected from the group consisting of H and ($C_1$-$C_6$)alkyl;
$X_2$ is selected from the group consisting of a compound of formula (VIII)

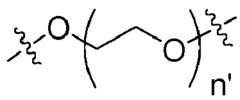

(VIII)

and a compound of formula (IX);

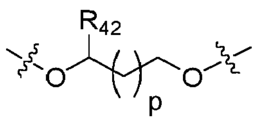

(IX)

and a mixture thereof;

wherein:

$R_{42}$ is selected from the group consisting of H and ($C_1$-$C_6$)alkyl;
p is an integer from 1 to 8; and
n' is an integer from 1 to 6.

In an embodiment, the process comprises depositing a sol-gel coating composition comprising an organic

precursor is a compound of formula (VII) as defined above wherein both $R_{40}$ and $R_{41}$ are H. In an embodiment, the process comprises depositing a sol-gel coating composition comprising an organic precursor is a compound of formula (VII) as defined above wherein both $R_{40}$ and $R_{41}$ are $(C_1-C_6)$alkyl; preferably methyl.

In an embodiment, the process comprises depositing a sol-gel coating composition comprising an organic precursor is a compound of formula (VII) as defined above wherein $X_2$ is a compound of formula (VIII) as defined above; particularly $X_2$ is a compound of formula (VIII) and n is from 1 to 5.

In an embodiment, the process comprises depositing a sol-gel coating composition comprising an organic precursor is a compound of formula (VII) as defined above wherein $X_2$ is a compound of formula (IX) as defined above. In an embodiment, the process comprises depositing a sol-gel coating composition comprising an organic precursor is a compound of formula (IX) as defined above wherein $X_2$ is a compound of formula (IX) and $R_{42}$ is H. In an embodiment, the process comprises depositing a sol-gel coating composition comprising an organic precursor is a compound of formula (VII) as defined above wherein $X_2$ is a compound of formula (IX) and $R_{42}$ is $(C_1-C_6)$alkyl; preferably methyl. In an embodiment, the process comprises depositing a sol-gel coating composition comprising an organic precursor is a compound of formula (VII) as defined above wherein $X_2$ is a compound of formula (IX) and p is from 1 to 4.

In an embodiment, the process comprises depositing a sol-gel coating composition comprising an organic precursor is a compound of formula (VII) selected from the group consisting of ethylene glycol dimethacrylate, di(ethylene glycol) dimethacrylate, tri(ethylene glycol) dimethacrylate, tetra(ethylene glycol) dimethacrylate, ethylene glycol diacrylate, di(ethylene glycol) diacrylate, 1,3-butanediol diacrylate, 1,6-hexanediol diacrylate, 1,6-hexanediol dimethacrylate, and mixture thereof. In an embodiment, optionally in combination with one or more features of the various embodiments described above or below, the organic precursor is selected from the group consisting of ethylene glycol dimethacrylate (EGDMA), di(ethylene glycol) dimethacrylate, tri(ethylene glycol) dimethacrylate, tetra(ethylene glycol) dimethacrylate, ethylene glycol diacrylate, di(ethylene glycol) diacrylate, tri(ethylene glycol) diacrylate, tetra(ethylene glycol) diacrylate, 1,3-butanediol dimethacrylate, 1,3-butanediol diacrylate, 1,6-hexanediol dimethacrylate, 1,6-hexanediol diacrylate and a mixture thereof. In an embodiment, the process comprises depositing a sol-gel coating composition comprising ethylene glycol dimethacrylate (EGDMA) as the organic precursor of formula (VII).

In an embodiment, the process comprises depositing a sol-gel coating composition comprising at least one organic precursor as defined above and at least one alkoxide being an organo-alkoxysilane as defined above. In an embodiment, the process comprises depositing a sol-gel coating composition comprising at least one organic precursor as defined above and at least one alkoxide being an organo-alkoxysilane as defined above, wherein the molar ratio between the organic precursor and the organo-alkoxysilane is from 0.1 to 10.

In an embodiment, the process comprises depositing a sol-gel coating composition comprising at least one metal alkoxide, at least one semimetal alkoxide or a mixture thereof being independently selected from a compound of formula (XIII)

$$(OR^{43})(OR^{44})(OR^{45})(OR^{46})Z \qquad (XIII)$$

wherein:

each one of $R^{43}$, $R^{44}$, $R^{45}$ and $R^{46}$ are independently selected from the group consisting of substituted or unsubstituted $(C_1-C_{14})$alkyl, $(C_5-C_6)$aryl, $(C_2-C_{14})$alkenyl and $(C_2-C_{14})$alkynyl group; and Z is selected from the group consisting of the metal and semimetal atoms.

In an embodiment, the process comprises depositing a sol-gel coating composition comprising a metal alkoxide, wherein the metal atom is selected from the group consisting of Al, Ti, Zr and Y; particularly Zr and Ti. In an embodiment, the process comprises depositing a sol-gel coating composition comprising a metal alkoxide, wherein the metal atom is Zr. In an embodiment, the process comprises depositing a sol-gel coating composition comprising a metal alkoxide is selected from the group consisting of zirconium (IV) n-propoxide (TPOZ), zirconium (IV) isopropoxide, zirconium (IV) n-butoxide, zirconium (IV) isobutoxide, and mixtures thereof; particularly zirconium (IV) n-propoxide (TPOZ). In an embodiment, the process comprises depositing a sol-gel coating composition comprising a metal alkoxide, wherein the metal atom is Ti. In an embodiment, the process comprises depositing a sol-gel coating composition comprising a metal alkoxide is selected from the group consisting of titanium n-propoxide, titanium isopropoxide, titanium n-butoxide, titanium isobutoxide, and mixtures thereof; particularly titanium n-propoxide and titanium isopropoxide (TISP).

In an embodiment, the process comprises depositing a sol-gel coating composition comprising a semimetal alkoxide, wherein the semimetal atom is selected from the group consisting of Si, Ge, B, As, Sb, Te, Po and At. In an embodiment, the process comprises depositing a sol-gel coating composition comprising a semimetal alkoxide, wherein the semimetal atom is Si. In an embodiment, the process comprises depositing a sol-gel coating composition comprising a semimetal alkoxide is selected from the group consisting of tetraethylorthosilicate (TEOS), tetramethyl orthosilicate (TMOS), and mixtures thereof; particularly tetraethylorthosilicate (TEOS).

In an embodiment, the process comprises depositing a sol-gel coating composition comprising an alkoxide selected from at least zirconium (IV) n-propoxide (TPOZ) as a metal alkoxide, at least tetraethylorthosilicate (TEOS) as

a semimetal alkoxide, and [3-(methacryloyloxy)propyl]trimethoxysilane (MAPTMS) or [3-(methacryloyloxy)propyl]triethoxysilane (MAPTES) as an organo-alkoxysilane.

In an embodiment, the process comprises depositing a sol-gel coating composition comprising an alkoxide selected from at least zirconium (IV) n-propoxide (TPOZ) as a metal alkoxide, at least tetraethylorthosilicate (TEOS) as a semimetal alkoxide, and (3-glycidyloxypropyl)trimethoxy silane (GPTMS) or (3-glycidyloxypropyl)triethoxy silane (GPTES) as an organo-alkoxysilane.

In an embodiment, the process comprises depositing a sol-gel coating composition comprising an alkoxide selected from at least zirconium (IV) n-propoxide (TPOZ) as a metal alkoxide, at least tetraethylorthosilicate (TEOS) as a semimetal alkoxide, and [3-(methacryloyloxy)propyl]trimethoxysilane (MAPTMS) as an organo-alkoxysilane; and ethylene glycol dimethacrylate (EGDMA) as an organic precursor.

In an embodiment, the process comprises depositing a sol-gel coating composition comprising at least one polymerization initiator. In an embodiment, the process comprises depositing a sol-gel coating composition comprising at least one polymerization initiator selected from the group consisting of azo compounds, peroxide compounds, imidazole compounds, aliphatic amines, phenylenediamines, carboxylic acids and their anhydrides and a mixture thereof. Examples of appropriate azo compounds include, without limitation azobisisobutyronitrile or 2,2'-azobis(2-methylpropionitrile) (AIBN) and 1,1'-azobis(cyclohexane carbonitrile) (ACHN). Examples of appropriate peroxide compounds include benzoyl peroxide and lauroyl peroxide. Examples of appropriate imidazole compounds for the present invention include, without limitation, (1-methylimidazole (1-MI), 2-methylimidazole (2-MI), 2-phenylimidazole (2-PhI), 1,2-dimethylimidazole (1,2-DMI), 2-ethyl-4-methylimidazole (2,4-EMI), 1-benzyl-2-methylimidazole (1,2-BMI). Examples of appropriate aliphatic amine include, without limitation, ethylenediamine (EDA), tris(2-aminoethyl)amine (TAEA), triethylenetetramine (TETA), or diethylenetriamine (DETA). Examples of phenylenediamines include without limitation, o-phenylenediamine (o-PDA), m-phenylenediamine (m-PDA), or p-phenylenediamine (p-PDA). Examples of appropriate carboxylic acids include, without limitation, phthalic acid (PA), hexahydro phthalic acid (HHPA), or tetrahydro phthalic acid (THPA). Examples of appropriate anhydrides of carboxylic acids include, without limitation phthalic anhydride (PA), hexahydro phthalic anhydride (HHPA), or tetrahydro phthalic anhydride (THPA). In an embodiment, the process comprises depositing a sol-gel coating composition comprising at least 2,2'-azobis(2-methylpropionitrile) (AIBN) as polymerization initiator. In an embodiment, the process comprises depositing a sol-gel coating composition comprising at least one polymerization initiator in a molar ratio between the organo-alkoxysilane and the polymerization initiator from 50 to 150; particularly from 50 to 100.

In an embodiment, the process comprises depositing a sol-gel coating composition comprising at least one complexing agent. In an embodiment, the process comprises depositing a sol-gel coating composition comprising at least one complexing agent selected from the group consisting of acetyl acetone (AcAc), methacrylic acid (MAc), acetic acid, isobutyric acid, bipyridine, and a mixture thereof. In an embodiment, the process comprises depositing a sol-gel coating composition comprising at least methacrylic acid (MAc) as complexing agent. In an embodiment, the process comprises depositing a sol-gel coating composition comprising at least one complexing agent in a molar ratio between the metal alkoxide, and the complexing agent from 0.5 to 4; from 0.7 to 3; particularly from 0.7 to 2.

In an embodiment, the process comprises depositing a sol-gel coating composition comprising at least one $(C_1-C_8)$alcohol. In an embodiment, the process comprises depositing a sol-gel coating composition comprising at least one $(C_1-C_8)$alcohol selected from the group consisting of ethanol, butanol, propanol, and a mixture thereof. The term "alcohol" refers to an "alkane" wherein at least one hydrogen atom is substituted by a hydroxyl group and that contains the number of carbon atoms specified in the description or claims. The term "alkane" refers to a saturated, branched or linear hydrocarbon that contains the number of carbon atoms specified in the description or claims. Examples include methanol, ethanol, n-propanol, iso-propanol, butanol, iso-butanol, and sec-butanol. In an embodiment, the process comprises depositing a sol-gel coating composition comprising at least ethanol as $(C_1-C_8)$alcohol. In an embodiment, the process comprises depositing a sol-gel coating composition comprising at least one $(C_1-C_8)$alcohol in a molar ratio between the organo-silicon alkoxide, and the $(C_1-C_8)$alcohol from 0.1 to 10.

In an embodiment, the process comprises depositing a sol-gel coating composition comprising an acid catalyst in aqueous solution. In an embodiment, the process comprises depositing a sol-gel coating composition comprising an acid catalyst in aqueous solution is an inorganic acid selected from the group consisting of $H_2SO_4$, HCl, $HNO_3$, and a mixture thereof; particularly $HNO_3$. The acid catalyst is in form of an aqueous solution having a pH lower than 5; preferably the pH is from 0 to 3. In an embodiment, the process comprises depositing a sol-gel coating composition comprising an acid catalyst in aqueous solution as defined above in a molar ratio between the sum of moles of alkoxides; particularly the sum of metal alkoxide plus semimetal alkoxide plus organo-silicon alkoxide plus functional organo-silicon alkoxide presents in the formulation; and moles of water of the aqueous acidic solution is from 0.01 to 100; preferable from 0.10 to 10.

In an embodiment, the process comprises depositing a sol-gel coating composition comprising:

an inorganic acid catalyst in aqueous solution independently selected from the group consisting of $H_2SO_4$, HCl, $HNO_3$, and a mixture thereof;

an ($C_1$-$C_8$)alcohol independently selected from the group consisting of methanol, ethanol, butanol, n-propanol, isopropanol, and a mixture thereof; and
a complexing agent selected from the group consisting of acetyl acetone, methacrylic acid, acetic acid, isobutyric acid, bipyridine, and a mixture thereof.

In an embodiment, the process comprises depositing a sol-gel coating composition comprising:

a polymerization initiator selected from the group consisting of azo compounds and a mixture thereof;
an inorganic acid catalyst in aqueous solution independently selected from the group consisting of $H_2SO_4$, HCl, $HNO_3$, and a mixture thereof;
an ($C_1$-$C_8$)alcohol independently selected from the group consisting of methanol, ethanol, butanol, n-propanol, isopropanol, and a mixture thereof; and
a complexing agent selected from the group consisting of acetyl acetone, methacrylic acid, acetic acid, isobutyric acid, bipyridine, and a mixture thereof.

In an embodiment, the process comprises depositing a sol-gel coating composition comprising:

2'-azobis(2-methylpropionitrile) (AIBN) as polymerization initiator;
$HNO_3$ as an acid catalyst in aqueous solution;
methanol, ethanol and/or n-propanol as ($C_1$-$C_8$)alcohols; and
methacrylic acid as complexing agent.

In an embodiment, the process comprises depositing a sol-gel coating composition comprising a alkoxide selected from at least zirconium (IV) n-propoxide (TPOZ) as a metal alkoxide, at least tetraethylorthosilicate (TEOS) as a semimetal alkoxide, [3-(methacryloyloxy)propyl]trimethoxysilane (MAPTMS) as an organo-alkoxysilane; 2'-azobis(2-methylpropionitrile) (AIBN) as polymerization initiator; $HNO_3$ as an acid catalyst in aqueous solution;
methanol, ethanol and/or n-propanol as ($C_1$-$C_8$)alcohols; and methacrylic acid as complexing agent.

In an embodiment, the process comprises depositing a sol-gel coating composition comprising a alkoxide selected from at least zirconium (IV) n-propoxide (TPOZ) as a metal alkoxide, at least tetraethylorthosilicate (TEOS) as a semimetal alkoxide, and [3-(methacryloyloxy)propyl]trimethoxysilane (MAPTMS) as an organo-alkoxysilane; ethylene glycol dimethacrylate (EGDMA) as an organic precursor; 2'-azobis(2-methylpropionitrile) (AIBN) as polymerization initiator; $HNO_3$ as an acid catalyst in aqueous solution; methanol, ethanol and/or n-propanol as ($C_1$-$C_8$)alcohols; and methacrylic acid as complexing agent.

For the purposes of the invention, the term "substrate" refers to any material susceptible to be spoiled. In an embodiment, the substrate is selected from the group consisting of metal, polymeric substrate, glass, and ceramic. In an embodiment, substrate is metal; preferably the metal is selected from the group consisting of aluminium, aluminium alloy, magnesium, magnesium alloy, carbon steel, stainless steel, as well as these metals and metallic alloys treated with conventional coatings that are commonly applied such as galvanising, electroplating, electroless plating, electrophoretic deposition, anodising, chemical conversion treatments, thermochemical surface treatments, thin films applied by dry techniques (e.g. Plasma Vapour Deposition, Chemical Vapour Deposition, thermal spraying), plasma based surface treatments. In an embodiment, the substrate is glass. In an embodiment, the substrate is a polymeric substrate. In an embodiment, the substrate is ceramic. In an embodiment, the substrate is aluminium alloy.

The term "glass" refers to a non-crystalline amorphous solid that is often transparent. The term "glass" is often defined in a broader sense, encompassing every solid that possesses a non-crystalline structure at the atomic scale and that exhibits a glass transition when heated towards the liquid state. In any case, the term "glass" encompasses the terms "silica glass" and "oxide glass". In particular, the term "silica glass" refers to any silica-based glass and combination thereof known in the state of the art. And, the term "oxide glass" refers to a glass that comprises oxide selected from the group consisting of Aluminum oxide, Antimony trioxide, Arsenic trioxide, Barium oxide, Bismuth(III) oxide, Boron trioxide, Calcium oxide, Cerium(III) oxide, Chromium(III) oxide, Gadolinium oxide, Germanium oxide, Iron(III) oxide, Lanthanum oxide, Lead(II) oxide, Lithium oxide, Magnesium oxide, Niobium pentoxide, Phosphorus pentoxide, Potassium oxide, Silicon dioxide, Sodium oxide, Strontium oxide, Sulphur dioxide, Tin dioxide, Titanium dioxide, Zinc oxide, Zirconium dioxide and combination therefore.

Step 1) of depositing the sol-gel composition over a substrate can be performed using the known techniques of the state of the art for depositing sol-gel coating compositions. In an embodiment, step 1) is performed by depositing the sol-gel layer over the substrate using a technique selected from the group consisting of spin-coating, web-coating, dip-coating, spray-coating, doctor blade coating, flow-coating, roll-coating, printing such as screen-printing, ink-jet printing, flexographic printing, gravure printing, and micro-gravure printing. In an embodiment, the sol-gel coating composition of the invention is deposited over the substrate (step 1) by dipping the substrate in the sol-gel coating composition as

defined in the present invention to obtain a coated substrate having one or more of the permanent properties selected from hydrophobicity, oleophobicity and antibacterial activity.

In an embodiment, step 1) of the process of the invention is performed by dipping the substrate in the sol-gel coating composition as disclosed in the present invention at a deposition rate from 1 cm/min to 40 cm/min.

In an embodiment, the process of the present invention further comprises a previous step prior to step 1) which comprises conditioning the substrate. The conditioning step of the substrate facilitates the deposition and/or coating steps. Regarding the nature of the substrate, the conditioning step is performed by using the corresponding technics known in the state of the art such as for example degreasing, cleaning, etching and/or blasting the substrate. The appropriate preparation/pre-treatment conditions can readily be determined by those skilled in the art according to the type of substrate being used. In a particular embodiment, when the substrate is an aluminium-based substrate the conditioning steps comprises an alkaline cleaning followed by acidic etching.

In a particular embodiment, when the substrate is polymer-based substrate the conditioning steps comprises activation of the surface to form free radicals on the surface by means of processes that break covalent bonds between stable C-C bonds, thus offering sites to promote adhesion of coatings. Example of known technics used for performing the conditioning step of the substrate can be, among others, plasma treatment, UV-Ozone treatment, wet-chemical etching.

As it is mentioned above, the process for preparing the coated substrate of the present invention comprises a curing step 2) after the deposition of the sol-gel coating composition over the substrate. Step 2) of the process of the invention can be performed using the known techniques of the state of the art for curing a coating on a substrate. In an embodiment, step 2) is performed by a technique selected from the group consisting of thermal curing; photochemical curing such as ultraviolet curing and infrared curing; microwave induced curing; other options include latent heat curing when substrate undergoes previous processes generating residual heat. In an embodiment, curing step (step 2) is performed by thermal curing at a temperature from 80 °C to 220 °C for an appropriate period of time; particularly from 0.1 h to 48 h. In an embodiment, curing step (step 2) is performed by thermal curing at a temperature from 80 °C to 200 °C for 30 min to 12 h.

In an embodiment, the process for preparing the coated substrate of the present invention further comprises adding one or more additives for the preparation of the sol1 or alternatively the sol3 as defined in the present invention. In an embodiment, the additive is selected from the group consisting of a corrosion inhibitor, an ink and a photoinitiator. Examples of appropriate corrosion inhibitors for the present invention include, without limitation, inorganic salts of Cerium, Yttrium, Manganese, Lanthanum, Lithium; organic compounds such as benzotriazole and benzothiazole derivatives, propargyl alcohol, 8-hydroxyquinoline; ceramic or metallic nanoparticles optionally doped with the corrosion inhibitor. Examples of appropriate inks for the present invention include, without limitation, inorganic and organic inks. Examples of organic inks include, without limitation, erythrosine B, calcien, fluoroscein, trypan blue, and brilliant green. Examples of appropriate photoinitiator for the present invention include, without limitation, cationic UV curing photoinitiators such as diaryliodonium or triarylsulfonium salts; and UV radical photoinitiators such as 2-benzyl-2-N,N-dimethylamino-1-(4-morpholino phenyl) butanone, 2,2-dimethoxy-2- phenyl acetophenone, 2-hydroxy-2-methylpropiophenone and 2-hydroxy-4'-(2-hydroxyethoxy)-2-methylpropiophenone.

The sol-gel coated substrates of the invention may be defined by its preparation process as defined above and therefore, those coated substrates obtainable by the process above is considered the second aspect of the invention. Thus, a coated substrate obtainable by a process of the first aspect of the invention is also part of the invention.

As it is mentioned above, the coated substrate obtained by the process of the invention comprising the sol-gel coating composition disclosed in the present invention have permanent hydrophobicity, oleophobicity and/or antibacterial activity. Furthermore, the coated substrates are also advantageous because allow having a permanent hydrophobicity, oleophobicity and/or antibacterial activity including a low amount of the functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl and a mixture thereof.

All the embodiments disclosed above for the steps of the process including the components of the sol-gel composition as well as the experimental conditions of each step of the process also apply for the coated substrates obtainable by the process. The coated substrates of the present invention are specially advantageous to obtain super-smooth surfaces and to prevent or retard adherence of undesirable agents such as substances dissolved in water, oil, grease, soiling, dust, ice, fingerprints, fog, fouling, biofouling or biofilm growth during its life service, as well as facilitate the surface cleaning in case of attachment.

The second alternative of the first aspect of the invention refers to a process for preparing a sol-gel coated substrate comprising:

1) firstly, depositing a sol-gel coating composition selected from the group consisting of sol3 over the substrate; and
2) secondly, curing the coating obtained in step 1);

wherein the sol3 is a sol-gel coating composition obtainable by a process which comprises:

b) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5
at least one organic precursor;
at least one polymerization initiator; and
optionally, at least one ($C_1$-$C_8$)alcohol;
at a temperature from 15 °C to 90 °C to obtain sol1; and
optionally ageing the resulting mixture sol1 by stirring at a temperature from 15 °C to 90 °C from 24 h to 72 h;

c) preparing a mixture B comprising:

at least one metal alkoxide;
at least one complexing agent;
optionally one or more ($C_1$-$C_8$) alcohol; and
optionally at least one acid catalyst in aqueous solution or water having a pH lower than 7;
at a temperature from 15 °C to 30 °C to obtain sol2; optionally ageing the resulting mixture sol2 by stirring at a temperature from 15 °C to 30 °C from 24 h to 72 h; and

d) mixing the sol 1 with the sol 2; optionally adding to the mixture obtained in step d) at least one acid catalyst in aqueous solution or water having a pH lower than 7; and ageing the resulting mixture by stirring at a temperature from 15 °C to 30 °C from 24 h to 72 h;
wherein, the organic precursor is a compound selected from the group consisting of a compound of formula (VI)

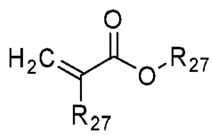

(VI)

, a compound of formula (VII)

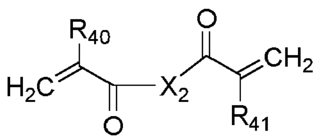

(VII)

and a mixture thereof
wherein:

$R_{27}$ are independently from ($C_1$-$C_6$)alkyl;
$R_{40}$ and $R_{41}$ are independently selected from the group consisting of H and ($C_1$-$C_6$)alkyl;
$X_2$ is selected from the group consisting of a compound of formula (VIII)

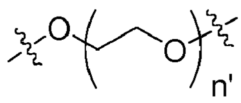

(VIII)

and a compound of formula (IX);

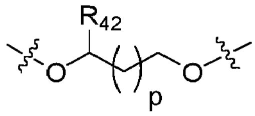

(IX)

and a mixture thereof;

wherein:

$R_{42}$ is selected from the group consisting of H and $(C_1-C_6)$alkyl;
p is an integer from 1 to 8; and
n' is an integer from 1 to 6.

A coated substrate obtainable by the process of the third aspect of the invention is also part of the invention. All the embodiments disclosed above for the process of the first aspect of the invention, such as the steps of the process, the components of the sol-gel composition as well as the experimental conditions of each step also apply for the process of the third aspect of the invention and for the coated substrates obtainable by this process. These coated substrates are specially advantageous to obtain super-smooth surfaces and to prevent or retard the formation of fouling, biofouling or biofilm growth during its life service, as well as facilitate the surface cleaning in case of attachment.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim and shall not be construed as limiting the scope of the claim. Furthermore, the present invention covers all possible combinations of particular and preferred embodiments described herein.

**Examples**

**Abbreviation**

TEOS: tetraethylorthosilicate
MAPTMS: [3-(methacryloyloxy)propyl]trimethoxysilane
GPTES: (3-glycidyloxypropyl)triethoxy silane
BPA: bisphenol A
IS: isosorbide
EDGMA: ethylene glycol dimethacrylate
AIBN: azobisisobutyronitrile or 2,2'-azobis(2-methylpropionitrile)
TPOZ: zirconium (IV) n-propoxide
MAAH: methacrylic acid
FAS13: (1H,1H,2H,2H-perfluorooctyl) triethoxy silane ($C_8H_4F_{13}$)
FAS17: (1H,1H,2H,2H-perfluorodecyl) triethoxy silane ($C_{10}H_4F_{17}$)
CAS12: n-dodecyltriethoxysilane ($C_{12}H_{25}$)
QAS: dimethyl octadecyl[3-(trimethoxysilyl) propyl] ammonium chloride

MeOH: methanol
EtOH: ethanol
1-PropOH: 1-propanol

## 1. Sol-gel coating composition

### 1.A- Composition

**First alternative composition comprising functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl**

**SOL1**

Table 1 shows the quantitative components of SOL1 comprising a functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof that intervene in the preparation of the coated substrates of the present invention by the depositing of these SOL1 over the substrate. The amount of the ingredients is expressed in molar ratio. Table 1 also discloses the process used for the preparation of the SOL1.

Table 1A

| Ingredients | | Sol-gel coating composition (Ex.) | | | |
|---|---|---|---|---|---|
| | | Process A | | | |
| **Description** | **Name** | **Ex.1** | **Ex.2** | **Ex.3** | **Ex. 4** |
| Semi-metal alkoxide | TEOS | 1 | 1 | 1 | 1 |
| Organo-alkoxysilane | MAPTMS | 1 | 1 | 1 | - |
| | GPTES | - | - | - | 1 |
| Acid aqueous solution | $HNO_3$ 0.01 N | 4 | 4 | 4 | 4 |
| ($C_1$-$C_8$)alcohol | EtOH | 10 | 10 | 10 | 10 |
| | MeOH | - | - | - | - |
| **Functional organo-alkoxysilane** | Type | **FAS13** | **FAS17** | **FAS17** | **FAS17** |
| | Amount | 0.01 | 0.01 | 0.05 | 0.01 |

Table 1B

| Ingredients | | Sol-gel coating composition (Ex.) | | | | |
|---|---|---|---|---|---|---|
| | | Process B | | | | |
| **Description** | **Name** | **Ex.5** | **Ex.6** | **Ex.7** | **Ex.8** | **Ex.9** |
| Semi-metal alkoxide | TEOS | 1 | 1 | 1 | 1 | 1 |
| Organo-alkoxysilane | MAPTMS | 1 | 1 | 1 | 1 | 1 |
| Organic precursor | EDGMA | 0.25 | 0.25 | 0.25 | 0.25 | 0.25 |
| Polymerization precursor | AIBN | 0.015 | 0.015 | 0.015 | 0.015 | 0.015 |
| Acid aqueous solution | $HNO_3$ 0.01N | 4 | 4 | 4 | 4 | 4 |
| ($C_1$-$C_8$)alcohol | EtOH | 10 | 10 | 10 | 10 | 7.86 |
| | MeOH | - | - | - | - | 2.14 |
| **Functional organo-alkoxysilane** | Type | **FAS13** | **FAS13** | **FAS17** | **FAS17** | **FAS17: QAS** |
| | Amount | 0.01 | 0.05 | 0.01 | 0.05 | 0.01:0.1 |

Table 2 shows the quantitative components of comparative SOL1 which does not comprise a functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof that intervene in the preparation of the comparative coated substrates falling outside of the present invention by the depositing of comparative SOL1 over the substrate. The amount of the ingredients is expressed in molar ratio. Table 2 also discloses the process used for the preparation of the comparative SOL1.

Table 2

| **Ingredients** | | **Comparative Sol-gel coating composition** | | |
|---|---|---|---|---|
| | | **Process A** | | **Process B** |
| **Description** | **Name** | **Comparative Ex.1** | **Comparative Ex.2** | **Comparative Ex.3** |
| Semi-metal alkoxide | TEOS | 1 | 1 | 1 |
| Organo-alkoxysilane | MAPTMS | 1 | - | 1 |
| | GPTES | - | 1 | - |
| Organic precursor | EDGMA | - | - | 0.25 |
| Polymerization initiator | AIBN | - | - | 0.015 |
| Acid aqueous solution | $HNO_3$ 0.01 N | 4 | 4 | 4 |
| ($C_1$-$C_8$)alcohol | EtOH | 10 | 10 | 10 |

**SOL3**

Table 3 shows the quantitative components of SOL3 comprising a functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof that intervene in the preparation of the coated substrates of the present invention by the depositing of these SOL3 over the substrate. Particularly, Table 3 shows the quantitative components of SOL1 and SOL2. The amount of the ingredients is expressed in molar ratio. Table 3 also discloses the process used for the preparation of the SOL1 and SOL2.

Table 3

| Ingredients | | Sol-gel coating composition (Ex.) | | | | | | | | |
|---|---|---|---|---|---|---|---|---|---|---|
| | | Sol | Process C | | | | | Process D | | |
| Description | Name | | 10 | 11 | 12 | 13 | 14 | 15 | 16 | 17 |
| Semi-metal alkoxide | TEOS | 1 | 0.5 | 0.5 | 0.5 | 0.5 | 0.5 | 0.125 | 0.125 | 0.125 |
| Organo-silicon alkoxide | MAPTMS | | 1 | 1 | 1 | 1 | 1 | 1 | 1 | 1 |
| Organic precursor | EDGMA | | 0.25 | 0.25 | 0.25 | 0.25 | 0.25 | 0.25 | 0.25 | 0.25 |
| Polymerization initiator | AIBN | | 0.015 | 0.015 | 0.015 | 0.015 | 0.015 | 0.015 | 0.015 | 0.015 |
| Acid aqueous solution | $HNO_3$ 0.01 N | | 3.5 | 3.5 | 3.5 | 3.5 | 3.5 | 1.03 | 1.08 | 1.03 |
| $(C_1-C_8)$alcohol | EtOH | | 9.42 | 9.42 | 9.42 | 9.42 | 9.42 | 1 | 1 | - |
| **Functional organo-alkoxysilane** | Type | | **FAS13** | **FAS17** | **FAS17** | **FAS17** | **FAS17: CAS12** | **FAS17** | **FAS17: CAS12** | **FAS17: QAS** |
| | Amount | | 0.075 | 0.01 | 0.05 | 0.075 | 0.1:0.1 | 0.02 | 0.05: 0.05 | 0.02:0.05 |
| Metal alkoxide | TPOZ | 2 | 0.5 | 0.5 | 0.5 | 0.5 | 0.5 | 0.125 | 0.125 | 0.125 |
| Complexing agent | MAAH | | 0.5 | 0.5 | 0.5 | 0.5 | 0.5 | 0.125 | 0.125 | 0.125 |
| $C_1-C_8)$alcohol | 1-PropOH | | 1.15 | 1.15 | 1.15 | 1.15 | 1.15 | 0.3 | 0.3 | - |
| | MeOH | | - | - | - | - | - | - | - | 0.3 |
| Acid aqueous solution | $HNO_3$ 0.01 N | | 1 | 1 | 1 | 1 | 1 | 1 | 1 | 1 |

**Second alternative composition comprising an organic precursor of formula (VII)**

Table 4 shows the quantitative components of SOL3 which comprises an organic precursor of formula (VII) but do not comprises a functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof that intervene in the preparation of the coated substrates of the third aspect of the invention by the depositing of these SOL3 over the substrate. The amount of the ingredients is expressed in molar ratio. Table 4 also discloses the process used for the preparation of the comparative SOL1 and SOL2.

Table 4

| **Ingredients** | | **Sol-gel coating composition (Ex.)** | | |
|---|---|---|---|---|
| | | **Sol** | **Process C** | **Process D** |
| **Description** | **Name** | | **Ex.18** | **Ex.19** |
| Semi-metal alkoxide | TEOS | SOL1 | 0.5 | 0.125 |
| Organo-alkoxysilane | MAPTMS | | 1 | 1 |
| Organic precursor | EDGMA | | 0.25 | 0.25 |
| Polymerization initiator | AIBN | | 0.015 | 0.015 |
| Aqueous solution of at least on acid catalyst | $HNO_3$ 0.01N | | 3.5 | 1.03 |
| ($C_1$-$C_8$)alcohol | EtOH | | 9.42 | 1 |
| Metal alkoxide | TPOZ | SOL2 | 0.5 | 0.125 |
| Complexing agent | MAAH | | 0.5 | 0.125 |
| $C_1$-$C_8$)alcohol | 1-PropOH | | 1.15 | 0.3 |
| Aqueous solution of at least on acid catalyst | $HNO_3$ 0.01 N | | 1 | 1 |

**1.B- Preparation Process**

**Process A. General procedure for the preparation of Examples 1-4(SOL1)**

TEOS, organo-alkoxysilane selected from the group consisting of MAPTMS and GPTES and at least one functional organo-alkoxysilane or organo-halosilane having a functional organosilyl moiety selected from the group consisting of quaternary ammonium silyl of 42% weight in methanol, polyfluoro-($C_1$-$C_{20}$)alkyl silyl, ($C_1$-$C_{40}$)alkyl silyl, and a mixture thereof were mixed in alcohol media, and aqueous solution $HNO_3$ 0.01 N was added. The resultant solution was stirred during 3 h at 80 °C to obtain SOL1.

The amount of components for the preparation of SOL1 are those disclosed in the above-mentioned Table 1.

The comparative Ex.1 and comparative Ex.2 were prepared following the process A using the components and amounts disclosed in Table 2 but without the addition of the functional organo-alkoxysilane or organo-halosilane having a functional organosilyl moiety selected of quaternary ammonium silyl, polyfluoro-($C_1$-$C_{20}$)alkyl silyl, ($C_1$-$C_{40}$)alkyl silyl, or a mixture thereof.

**Process B. General procedure for the preparation of Examples 5-9 (SOL1)**

Preparation of SOL1

Preparation of the first mixture

TEOS, MAPTMS and at least one functional organo-alkoxysilane or organo-halosilane having a functional organosilyl moiety selected from the group consisting of quaternary ammonium silyl of 42% weight in methanol, polyfluoro-($C_1$-$C_{20}$)alkyl silyl, ($C_1$-$C_{40}$)alkyl silyl, and a mixture thereof were mixed in alcohol media, and aqueous solution $HNO_3$ 0.01 N was added. The resultant solution was stirred during 3 h at 80 °C to obtain a first mixture.

Preparation of the second mixture

Separately and simultaneously, EGDMA and AIBN were mixed and stirred during 10 min at room temperature.

Combination of the first and the second mixture

After cooling the first mixture until reaching room temperature, the second mixture was added to the first mixture; and then, the resulting mixture was stirred for 30 min at room temperature to obtain SOL1.

The amount of components for the preparation of SOL1 are those disclosed in the above-mentioned Table 1.

The comparative Ex.3 was prepared following the process B using the components and amounts disclosed in Table 2 but without the addition of the functional organo-alkoxysilane or organo-halosilane having a functional organosilyl moiety selected of quaternary ammonium silyl, polyfluoro-($C_1$-$C_{20}$)alkyl silyl, ($C_1$-$C_{40}$)alkyl silyl, or a mixture thereof.

**Process C. General procedure for the preparation of Examples 10-14 and 18**

Preparation of SOL1

SOL1 was prepared following the Process B.

Preparation of SOL2

Separately and simultaneously, TPOZ of 70% weight in n-propanol and MAAH were mixed and stirred during for 30 min at room temperature to obtain SOL2.

Preparation of SOL3

SOL2 was poured in SOL1, and admixed. Then, aqueous $HNO_3$ 0.01 N was added and stirred during 30 in to form the SOL3.

The Example 18 of the present invention was prepared following the process C using the components and amounts disclosed in Table 5, particularly the organic precursor EDGMA of formula (VII) but without the addition of one functional organo-alkoxysilane or organo-halosilane having a functional organosilyl moiety selected from the group consisting of quaternary ammonium silyl of 42% weight in methanol, polyfluoro-($C_1$-$C_{20}$)alkyl silyl, ($C_1$-$C_{40}$)alkyl silyl, and a mixture thereof.

**Process D. General procedures for the preparation of Examples 15-17 and 19**

Preparation of SOL1

Preparation of the first mixture

MAPTMS was added to EtOH and the aqueous solution $HNO_3$ 0.01 N was added. The resultant solution was stirred during 30 minutes at room temperature.
Then, at least one functional organo-alkoxysilane or organo-halosilane having a functional organosilyl moiety selected from the group consisting of quaternary ammonium silyl of 42% weight in methanol, polyfluoro-($C_1$-$C_{20}$)alkyl silyl, ($C_1$-$C_{40}$)alkyl silyl, and a mixture thereof were added. Then, TEOS was added and finally an aqueous solution $HNO_3$ 0.01 N was added. The resultant solution was stirred during 1 h at 80°C to obtain a first mixture.

Preparation of the second mixture

Separately and simultaneously, EGDMA and AIBN were mixed and stirred during 10 min at room temperature.

Combination of the first and the second mixture

After cooling the first mixture until reaching room temperature, the second mixture was added to the first mixture; and then, the resulting mixture was stirred for 30 min at room temperature to obtain SOL1.

Preparation of SOL2

Separately and simultaneously, TPOZ of 70% weight in n-propanol and MAAH were mixed and stirred during for 30 min at room temperature to obtain SOL2.

Preparation of SOL3

SOL2 was poured in SOL1 under stirring. Then, aqueous $HNO_3$ 0.01 N was added and stirred during 30 in to form the SOL3.

The Example 19 of the present invention was prepared following the process D using the components and amounts disclosed in Table 5, particularly the organic precursor EDGMA of formula (VII) but without the addition of one functional organo-alkoxysilane or organo-halosilane having a functional organosilyl moiety selected from the group consisting of quaternary ammonium silyl of 42% weight in methanol, polyfluoro-($C_1$-$C_{20}$)alkyl silyl, ($C_1$-$C_{40}$)alkyl silyl, and a mixture thereof.

**2. Composition of coated substrate of the present invention**

**2A. Preparation process**

- Surface preparation

Polymeric substrates were degreased with a cloth soaked in acetone.

Glass substrates were degreased with a cloth soaked in acetone and introduced in ethanol solution under ultrasonication.
Aluminium alloys were degreased with a cloth soaked in acetone followed by chemical or mechanical pretreatments.
Then, the preparation of the surface was performed by i) chemical pre-treatment after acetone degreasing consisting in alkaline degreasing followed by acid etching, in order to activate the surface and improve the adherence with the sol-gel coating, as disclosed below:

Alkaline degreasing consisted of introducing the substrate in a solution of composition: 45 g/L of Turco 4215 NC LT and 2.5 ml/L of Turco 4215 NC LT at 50°C during 15 min.
Acid etching consisted of introducing the substrate in a solution of composition: 120 g/L of Turco SMUT GO NC and 14.4 ml/L $HNO_3$ (>65%) at room temperature during 5 min.

Or alternatively the surface preparation was performed by ii) mechanical pre-treatment after acetone degreasing through shot blasting with two different types of corundum particles the aluminium surface:

Blasting 1: Shot blasting the degreased substrate using white corundum particles being equal to or higher than 50 % of them diameter sized from 50 to 56 μm, at 3 bar and at a distance from 7 to 30 cm;
Blasting 2: Shot blasting the degreased substrate using white corundum particles being equal to or higher than 97 % of them diameter sized from 425 to 600 μm, at 3 bar and at a distance from 7 to 30 cm;

- Coating deposition and curing

The degreased, cleaned and pre-treated substrates obtained in the previous step were introduced in the corresponding sol-gel coating composition of the invention or alternatively, in the comparative sol-gel coating composition and then, they were withdrawn at 15 cm/min, followed by a thermal treatment at 150 °C during 2 h.

**2.B. Coating compositions of the invention and substrates.**

The composition of the mono-layer coated substrate of the present invention is disclosed in Table 5. Table 6 discloses the sol-gel composition used for each substrate: glass (G), the aluminum alloy 2024-T3 (A), and polyetherimide (P).

Table 5

| Coated substrate | Substrate | Coated substrate | Substrate | Coated substrate | Substrate | Sol-gel coating composition | Thickness (μm) |
|---|---|---|---|---|---|---|---|
| M1G | Glass | M1A | AA2024 | - | - | Ex.1 | 1.3 |
| M2G | Glass | M2A | AA2024 | - | - | Ex.2 | 1.6 |
| M3G | Glass | M3A | AA2024 | - | - | Ex.3 | 1.8 |
| M4G | Glass | M4A | AA2024 | - | - | Ex. 4 | 0.8 |
| M5G | Glass | M5A | AA2024 | - | - | Ex.5 | 1.7 |
| M6G | Glass | M6A | AA2024 | - | - | Ex.6 | 1.7 |
| M7G | Glass | M7A | AA2024 | - | - | Ex.7 | 1.5 |
| M8G | Glass | M8A | AA2024 | - | - | Ex.8 | 1.5 |
| M9G | Glass | M9A | AA2024 | M9P | PEI | Ex.9 | 1 |
| M10G | Glass | M10A | AA2024 | | | Ex.10 | 1.7 |
| M11G | Glass | M11A | AA2024 | - | - | Ex.11 | 1.5 |
| M12G | Glass | M12A | AA2024 | - | - | Ex.12 | 1.7 |
| M13G | Glass | M13A | AA2024 | - | - | Ex.13 | 1.8 |
| M14G | Glass | M14A | AA2024 | - | - | Ex.14 | 2.1 |
| M15G | Glass | M15A | AA2024 | - | - | Ex.15 | 5.5 |
| M16G | Glass | M16A | AA2024 | - | - | Ex.16 | 6.5 |
| M17G | Glass | M17A | AA2024 | - | - | Ex.17 | 7.5 |
| M18G | Glass | M18A | AA2024 | - | - | Ex.18 | 1 |
| M19G | Glass | M18A | AA2024 | - | - | Ex.19 | 3 |
| ND: not determined | | | | | | | |

**2.C. Coating comparative compositions and substrates.**

The composition of the comparative coated substrate of the falling outside the present invention is disclosed in Table 6. Table discloses the sol-gel composition used for each substrate glass (G) and aluminum alloy 2024-T3 (A).

Table 6

| Coated substrate | Substrate | Coated substrate | Substrate | Sol-gel coating composition | Thickness (μm) |
|---|---|---|---|---|---|
| Comp. M1G | Glass | Comp. M1A | AA2024 | Comparative Ex.1 | 1 |
| Comp. M2G | Glass | Comp. M2A | AA2024 | Comparative Ex.2 | 0.5 |
| Comp. M3G | Glass | Comp. M3A | AA2024 | Comparative Ex.3 | 1 |
| ND: not determined | | | | | |

**3. Characterization methods**

Contact angle

The contact angle was determined by the static drop method, using Digidrop Contact Angle Meter (GBX Instruments). Ten measurements of the apparent contact angle were taken for water $(\theta_c^{H_2O})$ and hexadecane $(\theta_c^{C_{16}H_{34}})$ by placing drops of each liquid on the horizontal and flat coating surface and measuring the angle at the liquid-solid-air

boundary. $\theta_c$ corresponds to the angle formed at the solid-liquid interface as presented in the Figure 1.

Surface free energy (SFE)

The SFE was determined by Owens-Wendt method, which considers two types of interaction in a solid-liquid interface. In particular, weak dispersive van der Waals forces, called dispersion component, and the stronger hydrogen-bonding forces associated with the polar interactions, as represented in Equation 1.

$$(\gamma_{sv}^{d}\gamma_{lv}^{d})^{0.5} + (\gamma_{sv}^{p}\gamma_{lv}^{p})^{0.5} = 0.5\gamma_{lv}(1+\cos\theta_c) \quad \text{Equation 1}$$

where $\theta_c$ is the contact angle; $\gamma$ is the surface tension; subscripts *sl, sv,* and *lv* refer to the solid-liquid, solid-vapour, and liquid-vapour interfaces, respectively; superscripts *d* and *p* refer to dispersive and polar components, respectively.

For solving equation, the contact angle must be measured using at least two liquids wherein at least one of them must have a polar part > 0. In particular, the SFE has been determined based on the measurements of the contact angle of the surface with water ($\gamma_{lv}^{p}$=51 mN/m; $\gamma_{lv}^{d}$=21.8 mN/m) and n-hexadecane ($\gamma_{lv}^{p}$=0 mN/m; $\gamma_{lv}^{d}$=27.5 mN/m).

The determination of polar and dispersive surface energy components was calculated from slope $(\sqrt{\gamma_{sv}^{p}})$ and y-intercept $(\sqrt{\gamma_{sv}^{d}})$ of the regression line when plotting $\frac{\gamma_{lv}(1+\cos\theta_c)}{2\sqrt{\gamma_{lv}^{d}}}$ versus $\sqrt{\frac{\gamma_{lv}^{p}}{\gamma_{lv}^{d}}}$ using experimental contact angle data as well as polar and dispersive theoretical surface tension values of each of the test liquids. The total surface free energy corresponds to the sum of polar and dispersive components.

Surface roughness

The roughness of coatings was measured using profilometer Dektak 150 according to ISO 4288 standard. Five 4.8-mm length scans were taken on each sample using a 2-$\mu$m radius stylus, 1 mg force and lengthwise resolution of 0.32 $\mu$m. Arithmetic average roughness, Ra, was calculated from the central 4 mm of the scan using short and long pass filter cut off of 800 $\mu$m. Mean Ra of the five scans for each sample was calculated.

Antimicrobial activity

The biocide activity was determined under antimicrobial tests conducted according to the ISO 22196:2011 standard: Measurement of antibacterial activity on plastics and other non-porous surfaces. Assessment of colony forming units of Escherichia coli CECT 516 and Staphylococcus aureus CECT 240 were performed at time 0 h and after 24 h of contact.

Adhesion test

The adherence of the sol-gel coatings of the present invention to the plastic substrate was evaluated by means of cross-cut tape adhesion tests, following the indications of Section 6 in the ISO 2409:2013(E). The test was performed in accordance with ISO 2409:2013(E) using hand-held, multi-blade cutting tool. A lattice pattern with several cuts in each direction was made in the coated substrate. Evaluation and designation of the results is performed according to Sections 7 and 8 in the ISO 2409:2013(E). Dry adherence test was performed on fresh coated PEI.

Corrosion test: Test of Neutral Salt Spray Fog Test (NSST).

The samples were tested in a C&W SF/1000/CCT corrosion chamber that met the conditions of the ASTM B-117-16 standard. According to Sections 8.1 and 10.1, the salt solution consisted of 5$\pm$1 part of NaCl in 95$\pm$1 part by mass of deionised water and the temperature in the exposure zone was maintained at 35$\pm$2 °C. Aluminium specimens were supported at 6° from the vertical in accordance with aeronautic specifications MIL-DTL-5541F (page 6, 11 July 2006) and MIL-DTL-81706B:2006 (page 11, 2 May 2006). The borders of the specimens were masked using a tape in order to cover the edges.

## 4. Results

### 4.A. Homogeneity and stability of the obtained sols

The sol-gel coating compositions of the present invention consisted in one-phase, homogeneous and totally transparent liquid, with a stable viscosity value at least along one month. Therefore, the sol-gel coating compositions of the present invention were useful to prepare homogeneous and repetitive coatings on several substrates.

### 4.B. Contact angle and surface free energy of coated substrates

The contact angle with water and hexadecane and the surface free energy of coated glass and aluminium alloy substrates (chemically pre-treated) of the present invention are disclosed in the Table 7.

Table 7

| Coated substrate | $\theta_c^{H_2O}$ (º) | $\theta_c^{C_{16}H_{34}}$ (º) | SFE (mJ/m$^2$) | Coated substrate | $\theta_c^{H_2O}$ (º) | $\theta_c^{C_{16}H_{34}}$ (º) | SFE (mJ/m$^2$) |
|---|---|---|---|---|---|---|---|
| M1G | 96.8±2.8 | 34.5±1.1 | 24.7 | M1A | 88.7±1.4 | 33.1±1.1 | 27.5 |
| M2G | 109.9±1.6 | 75.2±1.0 | 12.3 | M2A | 108.3±0.5 | 70.0±2.3 | 13.8 |
| M3G | 113.7±0.5 | 91.8±2.5 | 8.4 | M3A | 111.4±0.7 | 75.1±1.1 | 12.0 |
| M4G | 98.5±1.3 | 46.0±0.4 | 21.8 | M4A | 106.7±0.7 | 62.5±2.1 | 15.9 |
| M5G | 102.6±1.9 | 51.6±2.5 | 19.5 | M5A | 89.1±0.7 | 35.8±0.1 | 26.8 |
| M6G | 105.6±0.2 | 53.0±1.2 | 18.6 | M6A | 103.1±1.0 | 51.4±1.6 | 19.5 |
| M7G | 108.7±1.2 | 65.1±0.3 | 14.9 | M7A | 104.1±0.8 | 58.4±0.4 | 17.5 |
| M8G | 108.8±0.7 | 66.2±3.0 | 14.6 | M8A | 107.9±0.6 | 65.1±1.4 | 15.1 |
| M9G | 91.4±0.6 | 35.6±0.7 | 26.1 | M9A | 90.4±2.0 | 33.4±1.7 | 26.8 |
| M10G | 95.4±1.0 | 45.2±1.8 | 22.8 | M10A | 97.3±2.2 | 49.6±1.3 | 21.3 |
| M11G | 99.7±1.1 | 47.2±1.6 | 21.2 | M11A | 98.6±0.2 | 45.0±0.1 | 22.0 |
| M12G | 103.4±0.9 | 53.7±0.9 | 18.8 | M12A | 103.0±0.8 | 53.2±0.8 | 19.0 |
| M13G | 100.5±1.6 | 49.5±0.6 | 20.5 | M13A | 101.0±0.9 | 50.4±0.6 | 20.2 |
| M14G | 99.6±2.2 | 47.6±2.5 | 21.2 | M14A | 105.2±1.7 | 58.9±1.8 | 17.2 |
| M15G | 107.4±1.9 | 60.8±1.7 | 16.3 | M15A | 102.6±1.6 | 54.7±1.2 | 18.8 |
| M16G | 101.7±0.9 | 53.1±0.4 | 19.4 | M16A | 105.0±0.4 | 62.6±0.4 | 16.3 |
| M17G | 102.5±1.4 | 54.7±1.2 | 18.8 | M17A | 98.4±0.8 | 45.0±1.2 | 22.1 |
| M18G | 91.2±7.9 | 8.9±2.7 | 29.7 | M18A | ND | ND | ND |
| ND: not determined | | | | | | | |

The contact angle with water and hexadecane and the surface free energy of coated glass and aluminium alloy substrates (chemically pre-treated) of the comparative examples of present invention are disclosed in the Table 8.

Table 8

| Coated substrate | $\theta_c^{H_2O}$ (º) | $\theta_c^{C_{16}H_{34}}$ (º) | SFE (mJ/m$^2$) | Coated substrate | $\theta_c^{H_2O}$ (º) | $\theta_c^{C_{16}H_{34}}$ (º) | SFE (mJ/m$^2$) |
|---|---|---|---|---|---|---|---|
| Comp. M1G | 63.9±0.7 | 6.5±1.1 | 42.7 | Comp. M1A | 74.1±3.4 | 9.1±2.5 | 36.6 |
| Comp. M2G | 62.9±0.4 | 5.4±0.8 | 43.4 | Comp. M2A | 68.7±0.8 | 6.7±0.1 | 39.8 |

(continued)

| Coated substrate | $\theta_c^{H_2O}$ (º) | $\theta_c^{C_{16}H_{34}}$ (º) | SFE (mJ/m²) | Coated substrate | $\theta_c^{H_2O}$ (º) | $\theta_c^{C_{16}H_{34}}$ (º) | SFE (mJ/m²) |
|---|---|---|---|---|---|---|---|
| Comp. M3G | 68.8±0.4 | 10.1±0.8 | 39.6 | Comp. M3A | 65.3±0.8 | 10.5±0.5 | 41.7 |

**4.C. Roughness of pre-treated and coated substrates**

The roughness of the substrate before and after its treatment with the sol-gel coating compositions of the present invention (Ex. 17) are disclosed in the Table 9.

Table 9

| Substrate | Pre-treated substrate | Roughness Ra (nm) of pre-treated substrate | Coated substrate | Roughness Ra (nm) of coated substrate |
|---|---|---|---|---|
| Glass | Acetone degreasing | <5 | M15G | 2.4±0.6 |
| AA2024T3 | Alkaline and acid pre-treatments | 445±75 | M15A | 25±5 |
| AA2024T3 | Blasting 1 | 555±15 | M15A | 110±12 |
| AA2024T3 | Blasting 2 + Blasting 1 | 3350±400 | M15A | 355±40 |
| Glass | Acetone degreasing | <5 | M16G | 4.7±0.7 |
| AA2024T3 | Alkaline and acid pre-treatments | 445±75 | M16A | 80±20 |
| AA2024T3 | Blasting 1 | 555±15 | M16A | 120±15 |
| AA2024T3 | Blasting 2 + Blasting 1 | 3350±400 | M16A | 730±60 |
| Glass | Acetone degreasing | <5 | M17G | 20±5 |
| Glass | Acetone degreasing | <5 | M19G | 3.0±0.5 |

The roughness of the substrate before and after its treatment with the comparative sol-gel coating compositions falling outside of the scope of the present invention (comparative Ex. 1-3) are disclosed in the Table 10.

Table 10

| Substrate | Pre-treated substrate | Roughness Ra (nm) of pre-treated substrate | Coated substrate | Roughness Ra (nm) of coated substrate |
|---|---|---|---|---|
| Glass | Acetone degreasing | < 10 | Comp. M1G | 70±30 |
| AA2024T3 | Alkaline and acid pre-treatments | 445±75 | Comp. M1A | 160±40 |
| AA2024T3 | Alkaline and acid pre-treatments | 445±75 | Comp. M2A | 260±10 |
| Glass | Acetone degreasing | < 10 | Comp. M3G | 50±10 |
| AA2024T3 | Alkaline and acid pre-treatments | 445±75 | Comp. M3A | 190±15 |
| ND: not determined | | | | |

### 4.D. Antimicrobial activity coated substrates

The antimicrobial activity of the coated substrates after the treatment of the substrate with the sol-gel coating compositions of the present invention and the comparative sol-gel coating compositions falling outside the scope of the invention are disclosed in the Table 11.

Table 11

| Coated substrate | Escherichia coli | | Staphylococcus aureus | |
|---|---|---|---|---|
| | CFU t = 0 | CFU t = 24 h | CFU t = 0 | CFU t = 24 h |
| Comp. M3G | $2.82 \times 10^5$ | $6.7 \times 10^6$ | $2.68 \times 10^5$ | ND |
| M9G | | 6.7 | | ND |
| M15G | | $1.1 \times 10^3$ | | 139 |
| M17G | | 0 | | 383 |
| M19G | | 0 | | ND |
| ND: not determined | | | | |

### 4.F. Adherence on plastic substrate

The adherence on plastic substrate after the treatment of the substrate with the sol-gel coating compositions of the present invention are disclosed in the Table 12.

Table 12

| Coated substrate | Dry adherence |
|---|---|
| M9P | Score 0 (excellent adherence) |

### 4.G. Corrosion protection of AA2024-T3

The results of the corrosion protection of the sol-gel coating compositions of the present invention deposited on AA2024-T3 after exposure in the Neutral Salt Spray Test (NSST) are shown in Table 13.

Table 13

| Tested samples | Naked eye assessment |
|---|---|
| M15A | No corrosion evidence after 168 h of exposure in NSST |

### 5. Conclusion

The above-mentioned results clearly show that chemical precursor combination and synthesis conditions which derive in homogeneous, one-phase, transparent and stables sols have been found. In comparison with the sol-gel coating compositions disclosed in the state of the art, the sol-gel coating compositions of the present invention allow obtaining a repellent, omniphobic or multi-repellent coated substrate having hydrophobic, oleophobic and/or biocide properties appropriate for being used in a wide variety of uses such as for example the preparation of antiadhesive, easy-to-clean, antifogging, anti-icing and antifouling surfaces, having a low interfacial energy, low roughness and antibacterial activity also with anticorrosion properties.

In particular, the specific experimental conditions of the process of the present invention in combination with the reactants used for the preparation are important for attaining stable, homogenous, one-phase sols useful for obtaining repellent, repellent-biocide or omniphobic coated substrates having hydrophobic, oleophobic and/or biocide properties with low roughness.

### Citation List

1. ASTM B117-16
2. ISO 22196 2011
3. ISO 2409 2013
4. MIL-DTL-5541F
5. MIL-DTL-81706B
6. UNE-EN ISO-4288 1998

## Claims

**1.** A process for preparing a sol-gel coated substrate comprising:

1) firstly, depositing a sol-gel coating composition selected from the group consisting of sol1 and sol3 over the substrate
2) secondly, curing the coating obtained in step 1);

wherein the sol1 is a sol-gel coating composition obtainable by a process which comprises:

a) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5;
optionally, at least one ($C_1$-$C_8$)alcohol;
optionally, at least one organic precursor;
optionally, at least one polymerization initiator; and
optionally, at least one functional organo-alkoxysilane or organo-halosilane having a functional organosilyl moiety selected from the group consisting of quaternary ammonium silyl, fluoro-($C_1$-$C_{20}$)alkyl silyl, ($C_1$-$C_{40}$)alkyl silyl, and a mixture thereof;
at a temperature from 15 °C to 90 °C for an appropriate period of time to obtain sol1; and
optionally ageing the resulting mixture sol1 by stirring at a temperature from 15 °C to 30 °C for a period of time from 24 h to 72 h to obtain sol1;

and
wherein the sol3 is a sol-gel coating composition obtainable by a process which comprises:

b) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5
optionally, at least one organic precursor;
optionally, at least one polymerization initiator;
optionally, at least one ($C_1$-$C_8$)alcohol; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
at a temperature from 15 °C to 90 °C to obtain sol1; and
optionally ageing the resulting mixture sol1 by stirring at a temperature from 15 °C to 30 °C from 24 h to 72 h;

c) preparing a mixture B comprising:

at least one metal alkoxide;
at least one complexing agent;
optionally, at least one acid catalyst in aqueous solution or water having a pH lower than 7;
optionally, one or more ($C_1$-$C_8$) alcohol; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl,

$(C_1-C_{40})$alkyl silyl, and a mixture thereof,
at a temperature from 15 °C to 30 °C for an appropriate period of time to obtain sol2; and optionally ageing the resulting mixture sol2 by stirring at a temperature from 15 °C to 30 °C from 24 h to 72 h; and

d) mixing the sol 1 with the sol 2; optionally adding to the mixture obtained in step d) at least one acid catalyst in aqueous solution or water having a pH lower than 7; and ageing the resulting mixture by stirring at a temperature from 15 °C to 30 °C from 24 h to 72 h;

with the proviso that the sol-gel coating composition of step 1) comprises at least one functional organo-alkoxysilane or organo-halosilane having a functional organosilyl moiety selected from the group consisting of quaternary ammonium silyl, polyfluoro-$(C_1-C_{20})$alkyl silyl, $(C_1-C_{40})$alkyl silyl, and a mixture thereof;
or alternatively,
a process for preparing a sol-gel coated substrate comprising:

1) firstly, depositing a sol-gel coating composition selected from the group consisting of sol3 over the substrate; and
2) secondly, curing the coating obtained in step 1);

wherein the sol3 is a sol-gel coating composition obtainable by a process which comprises:

b) preparing a mixture A comprising:

at least one alkoxide selected from the group consisting of a metal alkoxide, a semimetal alkoxide, an organo-alkoxysilane and a mixture thereof;
at least one acid catalyst in aqueous solution having a pH lower than 5;
at least one organic precursor;
at least one polymerization initiator; and
optionally, at least one $(C_1-C_8)$alcohol;
at a temperature from 15 °C to 90 °C to obtain sol1; and
optionally ageing the resulting mixture sol1 by stirring at a temperature from 15 °C to 90 °C from 24 h to 72 h;

c) preparing a mixture B comprising:

at least one metal alkoxide;
at least one complexing agent;
optionally one or more $(C_1-C_8)$ alcohol; and
optionally at least one acid catalyst in aqueous solution or water having a pH lower than 7;
at a temperature from 15 °C to 30 °C to obtain sol2; optionally ageing the resulting mixture sol2 by stirring at a temperature from 15 °C to 30 °C from 24 h to 72 h; and

d) mixing the sol 1 with the sol 2; optionally adding to the mixture obtained in step d) at least one acid catalyst in aqueous solution or water having a pH lower than 7; and ageing the resulting mixture by stirring at a temperature from 15 °C to 30 °C from 24 h to 72 h;

wherein, the organic precursor is a compound selected from the group consisting of a compound of formula (VI)

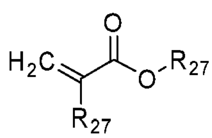

(VI)

, a compound of formula (VII)

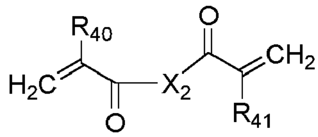

(VII)

and a mixture thereof
wherein:

$R_{27}$ are independently from $(C_1-C_6)$alkyl;
$R_{40}$ and $R_{41}$ are independently selected from the group consisting of H and $(C_1-C_6)$alkyl;
$X_2$ is selected from the group consisting of a compound of formula (VIII)

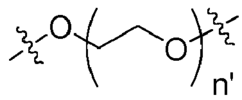

(VIII)

and a compound of formula (IX);

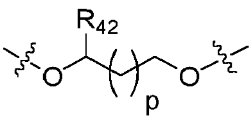

(IX)

and a mixture thereof;
wherein:

$R_{42}$ is selected from the group consisting of H and $(C_1-C_6)$alkyl;
p is an integer from 1 to 8; and
n' is an integer from 1 to 6.

**2.** The process according to claim 1, which comprises depositing a sol1 sol-gel coating composition obtainable by a process which comprises:

a1) preparing a mixture A1 comprising:

at least one semimetal alkoxide;
at least one organo-alkoxysilane;
at least one acid catalyst in aqueous solution having a pH lower than 5; and
optionally at least one $(C_1-C_8)$alcohol; and
optionally at least one functional organo-alkoxysilane or organo-halosilane having a functional organosilyl moiety selected from the group consisting of quaternary ammonium silyl, polyfluoro-$(C_1-C_{20})$alkyl silyl, $(C_1-C_{40})$alkyl silyl, and a mixture thereof;

by:

a1') the semimetal alkoxide; the organo-alkoxysilane; optionally at least one $(C_1-C_8)$alcohol; mixing an aqueous solution of at least one acid catalyst in aqueous solution having a pH lower than 5; and at least one functional organo-alkoxysilane or organo-halosilane having a functional organosilyl moiety selected from the group consisting of quaternary ammonium silyl, polyfluoro-$(C_1-C_{20})$alkyl silyl, $(C_1-C_{40})$alkyl silyl, and a mixture thereof at a temperature from 15 °C to 90 °C for an appropriate period of time to obtain the sol1-1; and

a1") optionally ageing the resulting mixture by stirring at a temperature from 15 °C to 30 °C from 24 h to 72 h to obtain the ageing sol1-1;

which the proviso that the sol1-1 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
or alternatively;

a2) preparing a mixture A2 comprising:

at least one semimetal alkoxide;
at least one organo-alkoxysilane;
at least one acid catalyst in aqueous solution having a pH lower than 5
at least one organic precursor;
optionally, at least one polymerization initiator;
at least one ($C_1$-$C_8$)alcohol; and
at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a2') preparing a first mixture comprising the semimetal alkoxide; the organo-alkoxysilane; at least one ($C_1$-Cs)alcohol; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a2") preparing a second mixture comprising an aqueous solution of at least one acid catalyst in aqueous solution having a pH lower than 5; at least one organic precursor; optionally, at least one polymerization initiator or a mixture thereof; at least one ($C_1$-$C_8$) alcohol; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a2"') mixing the second mixture and the first mixture at a temperature from 15°C to 30°C; and stirring the resulting mixture at a temperature from 15 °C to 90 °C for an appropriate period of time to obtain the sol1-2; and
a2"") optionally ageing the resulting mixture by stirring at a temperature from 15 °C to 30 °C from 24 h to 72 h to obtain the ageing sol1-2;

which the proviso that the sol1-2 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
or alternatively;

a3) preparing a mixture A3 comprising:

at least one semimetal alkoxide;
at least one organo-alkoxysilane;
at least one acid catalyst in aqueous solution having a pH lower than 5
at least one organic precursor;
optionally, at least one polymerization initiator;
optionally, at least one ($C_1$-$C_8$)alcohol; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a3') preparing a first mixture comprising the organo-alkoxysilane; optionally at least one ($C_1$-$C_8$)alcohol; an

aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a3") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl at a temperature from 15 °C to 30 °C;
a3"') adding at least one semimetal alkoxide at a temperature from 15 °C to 30 °C;
a3""v) preparing a second mixture comprising at least one organic precursor; optionally, at least one polymerization initiator; optionally, an aqueous solution of at least one acid catalyst in aqueous solution having a pH lower than 5; or a mixture thereof; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a3$^{v}$) mixing the second mixture with the mixture obtained in step a3"') at a temperature from 15 °C to 30 °C to obtain the sol1-3; and
a3$^{vi}$) optionally ageing the resulting mixture by stirring at a temperature from 15 °C to 30 °C from 24 h to 72 h to obtain the ageing sol1-3;

which the proviso that the sol1-3 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;
or alternatively,

a4) preparing a mixture A4 comprising:

at least one organo-alkoxysilane;
at least one acid catalyst in aqueous solution having a pH lower than 5
at least one organic precursor;
optionally, at least one polymerization initiator; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a4') preparing a first mixture comprising the organo-alkoxysilane; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a4") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;; and stirring the resulting mixture at a temperature from 15 °C to 90 °C; and
a4"') preparing a second mixture comprising at least one organic precursor; optionally, at least one polymerization initiator or a mixture thereof; optionally, an aqueous solution of at least one acid catalyst in aqueous solution having a pH lower than 5; and optionally at least one functional organo-alkoxysilane or
organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a4"") mixing the second mixture with the mixture obtained in step a4"') at a temperature from 15 °C to 30 °C to obtain the sol1-4; and
a4$^{v}$) optionally ageing the resulting mixture by stirring at a temperature from 15 °C to 30 °C from 24 h to 72 h to obtain the ageing sol1-4;

which the proviso that the sol1-4 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

or alternatively,

a5) preparing a mixture A5 comprising:

at least one semimetal alkoxide;
at least one organo-alkoxysilane;
at least one acid catalyst in aqueous solution having a pH lower than 5
at least one organic precursor;
optionally, at least one polymerization initiator; and
optionally, at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof;

by:

a5') preparing a first mixture comprising the organo-alkoxysilane; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;
a5") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a5"') adding at least one semimetal alkoxide at a temperature from 15 °C to 30 °C;
a5"") mixing the resulting mixture at a temperature from 15 °C to 90 °C; and stirring the resulting mixture at a temperature from 15 °C to 90 °C; and
a5$^{v}$) preparing a second mixture comprising an aqueous solution of at least at least one organic precursor; optionally, at least one polymerization initiator or a mixture thereof; optionally, one acid catalyst in aqueous solution having a pH lower than 5;and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a5$^{vi}$) mixing the second mixture with the mixture obtained in step a5"') at a temperature from 15 °C to 30 °C to obtain the sol1-5; and
a5$^{vii}$) optionally ageing the resulting mixture by stirring at a temperature from 15 °C to 30 °C from 24 h to 72 h to obtain the ageing sol1-5; and

which the proviso that the sol1-5 comprises at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

**3.** The process according to any of the claims 1 or 2, which comprises depositing a sol3 sol-gel coating composition obtainable by a process which comprises:

b) preparing a sol1 selected from the group consisting of sol1-1, sol1-2, sol1-3, sol1-4, sol1-5, ageing sol1-1, ageing sol1-2, ageing sol1-3, ageing sol1-4 and ageing sol1-5 as defined in claim 2;
c) preparing a sol2 by preparing a mixture B by mixing at least one metal alkoxide; at least one complexing agent; optionally one or more ($C_1$-$C_8$) alcohol; optionally, at least one acid catalyst in aqueous solution or water having a pH lower than 7; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof, at a temperature from 15 °C to 90 °C to obtain sol2; optionally ageing the resulting mixture sol2 by stirring at a temperature from 15 °C to 30 °C from 24 h to 72 h to obtain ageing sol2; and
d) mixing the sol 1 with the sol 2, optionally adding to the mixture obtained in step d) at least one acid catalyst in aqueous solution or water having a pH lower than 7; and ageing the resulting mixture by stirring at a temperature from 15 °C to 30 °C from 24 h to 72 h to obtain sol3 selected from the group consisting of sol3-1, sol3-1, sol3-2, sol3-3, sol3-4, sol3-5, ageing sol3-1, ageing sol3-2, ageing sol3-3, ageing sol3-4 and ageing sol3-5, respectively.

**4.** The process according to any of the claims 1-3, which comprises depositing a sol-gel coating composition selected

from the group consisting of sol1 and sol3 over the substrate, wherein: the sol 1 comprises the organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof.

**5.** The process according to claim 4, wherein:

When the sol1 is a sol1-1, then sol1-1 is obtainable by a process wherein step a1') mixing the semimetal alkoxide; the organo-alkoxysilane; optionally at least one ($C_1$-$C_8$)alcohol; an aqueous solution of at least one acid catalyst in aqueous solution having a pH lower than 5; and at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C for an appropriate period of time to obtain the sol1-1; and a1") optionally ageing the resulting mixture by stirring at a temperature from 15 °C to 30 °C from 24 h to 72 h; or alternatively,
When the sol1 is a sol1-2, then sol1-2 is obtainable by a process wherein step a2') preparing a first mixture comprising the semimetal alkoxide; the organo-alkoxysilane; at least one ($C_1$-$C_8$)alcohol; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C; a2") preparing a second mixture comprising an aqueous solution of at least one acid catalyst in aqueous solution having a pH lower than 5; at least one organic precursor; optionally, at least one polymerization initiator or a mixture thereof; at least one ($C_1$-$C_8$) alcohol; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C; a2"') mixing the second mixture and the first mixture at a temperature from 15°C to 30°C; and stirring the resulting mixture at a temperature from 15 °C to 90 °C for an appropriate period of time to obtain the sol1-2; and a2"") optionally ageing the resulting mixture by stirring at a temperature from 15 °C to 30 °C from 24 h to 72 h; or alternatively,
When the sol1 is a sol1-3, then sol1-3 is obtainable by a process wherein step a3') preparing a first mixture comprising the organo-alkoxysilane; optionally at least one ($C_1$-$C_8$)alcohol; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;

a3") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl at a temperature from 15 °C to 30 °C;
a3"') adding at least one semimetal alkoxide at a temperature from 15 °C to 30 °C;
a3""$^{v}$) preparing a second mixture comprising at least one organic precursor; optionally, at least one polymerization initiator; optionally, an aqueous solution of at least one acid catalyst in aqueous solution having a pH lower than 5; or a mixture thereof; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;
a3$^{v}$) mixing the second mixture with the mixture obtained in step a3"') at a temperature from 15 °C to 30 °C to obtain the sol1-3; and
a3$^{vi}$) optionally ageing the resulting mixture by stirring at a temperature from 15 °C to 30 °C from 24 h to 72 h; or alternatively,

When the sol1 is a sol1-4, then sol1-4 is obtainable by a process wherein step a4') preparing a first mixture comprising the organo-alkoxysilane; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;

a4") optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C; and stirring the resulting

mixture at a temperature from 15 °C to 90 °C; and

a4''') preparing a second mixture comprising at least one organic precursor; optionally, at least one polymerization initiator or a mixture thereof; optionally, an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;

a4'''') mixing the second mixture with the mixture obtained in step a4''') and stirring at a temperature from 15 °C to 90 °C to obtain the sol1-4; and

a4$^{v}$) optionally ageing the resulting mixture by stirring at a temperature from 15 °C to 30 °C from 24 h to 72 h; or alternatively,

When the sol1 is a sol1-5, then sol1-5 is obtainable by a process wherein step a5') preparing a first mixture comprising the organo-alkoxysilane; an aqueous solution of at least one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 90 °C;

a5'') optionally, adding at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;

a5''') adding at least one semimetal alkoxide at a temperature from 15 °C to 30 °C;

a5'''') mixing the resulting mixture at a temperature from 15 °C to 90 °C; and stirring the resulting mixture at a temperature from 15 °C to 90 °C; and

a5$^{v}$) preparing a second mixture comprising at least one organic precursor; optionally, at least one polymerization initiator or a mixture thereof; optionally, one acid catalyst in aqueous solution having a pH lower than 5; and optionally at least one functional organo-alkoxysilane or organo-halosilane having a functional organosilyl moiety selected from the group consisting of quaternary ammonium silyl, polyfluoro-($C_1$-$C_{20}$)alkyl silyl, ($C_1$-$C_{40}$)alkyl silyl, and a mixture thereof at a temperature from 15 °C to 30 °C;

a5$^{vi}$) mixing the second mixture with the mixture obtained in step a5''') at a temperature from 15 °C to 90 °C to obtain the sol1-5; and

a5$^{vii}$) optionally ageing the resulting mixture by stirring at a temperature from 15 °C to 30 °C from 24 h to 72 h.

**6.** The process according to any of the claims 1-5, wherein, the at least one functional organo-alkoxysilane or organo-halosilane having a functional organosilyl moiety selected from the group consisting of:quaternary ammonium silyl, polyfluoro-($C_1$-$C_{20}$)alkyl silyl, ($C_1$-$C_{40}$)alkyl silyl, is selected from the group consisting of: one or more quaternary ammonium alkoxysilanes; one or more quaternary ammonium halosilanes; one or more polyfluoro-($C_1$-$C_{20}$)alkyl alkoxysilanes; one or more polyfluoro-($C_1$-$C_{20}$) halosilanes; one or more ($C_1$-$C_{40}$)alkyl alkoxysilanes; one or more ($C_1$-$C_{40}$)alkyl halosilanes; a mixture of one or more quaternary ammonium alkoxysilane and one or more polyfluoro-($C_1$-$C_{20}$)alkyl alkoxysilanes; a mixture of one or more quaternary ammonium alkoxysilane and one or more polyfluoro-($C_1$-$C_{20}$) halosilanes; a mixture of one or more quaternary ammonium halosilanes and one or more polyfluoro-($C_1$-$C_{20}$)alkyl alkoxysilanes; a mixture of one or more polyfluoro-($C_1$-$C_{20}$)alkyl alkoxysilanes and one or more ($C_1$-$C_{40}$)alkyl alkoxysilane; a mixture of one or more polyfluoro-($C_1$-$C_{20}$)alkyl alkoxysilanes and one or more ($C_1$-$C_{40}$)alkyl halosilanes; a mixture of one or more polyfluoro-($C_1$-$C_{20}$) halosilanes and one or more ($C_1$-$C_{40}$)alkyl alkoxysilane; a mixture of one or more polyfluoro-($C_1$-$C_{20}$) halosilanes and one or more ($C_1$-$C_{40}$)alkyl halosilanes; a mixture of one or more quaternary ammonium alkoxysilane and one or more ($C_1$-$C_{40}$)alkyl alkoxysilane; a mixture of one or more quaternary ammonium alkoxysilane and one or more ($C_1$-$C_{40}$)alkyl halosilanes; a mixture of one or more quaternary ammonium halosilanes and one or more ($C_1$-$C_{40}$)alkyl alkoxysilane; a mixture of one or more quaternary ammonium alkoxysilane, one or more polyfluoro-($C_1$-$C_{20}$)alkyl alkoxysilane and one or more ($C_1$-$C_{40}$)alkyl alkoxysilane; a mixture of one or more quaternary ammonium alkoxysilane, one or more polyfluoro-($C_1$-$C_{20}$) halosilanes and one or more ($C_1$-$C_{40}$)alkyl alkoxysilane; a mixture of one or more quaternary ammonium alkoxysilane, one or more polyfluoro-($C_1$-$C_{20}$)alkyl alkoxysilane and one or more ($C_1$-$C_{40}$)alkyl halosilanes; a mixture of one or more quaternary ammonium alkoxysilane, one or more polyfluoro-($C_1$-$C_{20}$) halosilanes and one or more ($C_1$-$C_{40}$)alkyl halosilanes; and a mixture of one or more quaternary ammonium halosilanes, one or more polyfluoro-($C_1$-$C_{20}$)alkyl silane and one or more ($C_1$-$C_{40}$)alkyl alkoxysilane

**7.** The process according to any of the claims 1-6, wherein:

the at least one quaternary ammonium silane is a compound of formula (XIV)

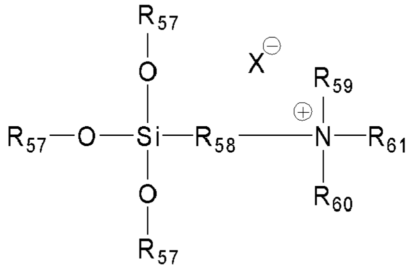

(XIV)

wherein each X is an halogen independently selected from the group consisting of chlorine, bromine and iodine; each $R^{57}$ is independently a $(C_1-C_6)$alkyl, particularly selected form methyl, ethyl, n-propyl, isopropyl and butyl; $R^{58}$ is a $(C_1-C_{20})$alkylene, $R^{59}$ is $(C_1-C_{20})$alkyl, $R^{60}$ is $(C_1-C_{20})$alkyl and $R^{61}$ is $(C_1-C_{20})$alkyl;
the at least one polyfluoro-$(C_1-C_{20})$alkyl alkoxysilane or a polyfluoro-$(C_1-C_{20})$alkyl halosilane is selected from the group consisting of a compound of formula (XV)

$[CF_3-(CF_2)_v(CH_2)_u]_w-Si(OR^{47})_y$ (XV)

wherein each $R^{47}$ is independently $(C_1-C_{20})$alkyl; u and v are independently an integer from 0 to 20, w is an integer selected from 1, 2 and 3; y is an integer selected from 1, 2, and 3; and the sum of w+y is 4;
and a compound of formula (XVI)

$[CF_3-(CF_2)_v(CH_2)_u]_w-SiX_y$ (XVI)

wherein each X is independently an halogen independently selected from the group consisting of chlorine, bromine and iodine; u and v are independently an integer from 0 to 20, w is an integer selected from 1, 2 and 3; y is an integer selected from 1, 2, and 3; and the sum of w+y is 4;
the at least one $(C_1-C_{40})$alkyl alkoxysilanes or a $(C_1-C_{40})$alkyl halosilanes is selected from the group consisting of a compound of formula (XVII)

$(R^{51})_aSi(OR^{52})_b$ (XVII)

wherein each $R^{51}$ is independently a $(C_1-C_{40})$alkyl; each $R^{52}$ is independently a $(C_1-C_{20})$alkyl; w is an integer selected from 1, 2 and 3; y is an integer selected from 1, 2, and 3; and the sum of w+y is 4;
and a compound of formula (XVII)

$[CH_3-(CH_2)_u]_w-SiX_y$ (XVIII)

wherein each X is an halogen independently selected from the group consisting of chlorine, bromine and iodine; u is an integer from 0 to 40, w is an integer selected from 1, 2 and 3; y is an integer selected from 1, 2, and 3; and the sum of w+y is 4.

**8.** The process according to any of the claims 1-7, wherein the organo-alkoxysilane is selected from the group consisting of:

a compound of formula (I);

$[R^4]_s-Si(OR^1)_t(OR^2)(OR^3)$ (I)

a compound of formula (II);

$[R^8-(CH_2)_m]-Si(OR^5)_qR^6_r$ (II)

a compound of formula (III)

$$({}^{9}RO)({}^{10}RO)({}^{11}RO)Si\text{-}X_1\text{-}Si(OR^{12})(OR^{13})(OR^{14}) \qquad (III)$$

a mixture of at least a compound of formula (I) wherein $R^4$ is $(C_1\text{-}C_4)$alkenyl and at least a compound of formula (I) wherein $R^4$ is $(C_2\text{-}C_{20})$alkyl-CH=CH-;
a mixture of at least a compound of formula (I) and at least a compound of formula (II);
a mixture of at least a compound of formula (I) and at least a compound of formula (III);
a mixture of at least a compound of formula (II) and at least a compound of formula (III);

wherein:

each one of $R^1$, $R^2$ and $R^3$ are independently a substituted or un-substituted $(C_1\text{-}C_{14})$alkyl;
$R^4$ is selected from the group consisting of a substituted or un-substituted $(C_2\text{-}C_{14})$alkenyl, $(C_5\text{-}C_6)$aryl, $(C_2\text{-}C_{14})$alkynyl; and $(C_2\text{-}C_{20})$alkyl-CH=CH-;
$R^5$, $R^6$, $R^9$, $R^{10}$, $R^{11}$, $R^{12}$, $R^{13}$ and $R^{14}$ are independently selected from the group consisting of a substituted or un-substituted $(C_1\text{-}C_{14})$alkyl, $(C_5\text{-}C_6)$aryl, $(C_2\text{-}C_{14})$alkenyl, and $(C_2\text{-}C_{14})$alkyl-CH=CH-;
$R^8$ is selected from the group consisting of H, -SH, substituted or un-substituted $(C_1\text{-}C_{12})$alkyl, substituted or un-substituted $(C_5\text{-}C_6)$aryl, $-(CF_2)_b\text{-}CF_3$, $-NR^{15}R^{16}$, a compound of formula (IV)

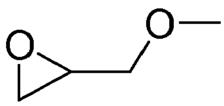

(IV)

and a compound of formula (V)

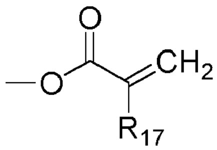

(V)

$R^{15}$ and $R^{16}$ are independently selected from the group consisting of H, substituted or un-substituted $(C_1\text{-}C_{12})$alkyl, -CO, and substituted or un-substituted $(C_5\text{-}C_6)$aryl;
$R^{17}$ is selected from the group consisting of H and substituted or un-substituted $(C_1\text{-}C_{12})$alkyl;
$X_1$ is selected from the group consisting of substituted or unsubstituted $-(C_1\text{-}C_{12})$alkylene-, $-(C_1\text{-}C_{12})$alkylene-NH-$(C_1\text{-}C_{12})$alkylene-, and $-(C_1\text{-}C_{12})$alkylene-$(S)_{n\text{-}}$$(C_1\text{-}C_{12})$alkylene-;
m is an integer from 0 to 20;
n is an integer from 1 to 4;
q is an integer from 2 to 3;
r is an integer from 0 to 1;
s is an integer from 1 to 2;
t is an integer from 0 to 1;
the sum of q + r is 3;
the sum of s + t is 2; and
b is an integer from 0 to 12.

**9.** The process according to any of the claims 1-8, wherein the organic precursor is selected from the group consisting of a compound of formula (VI)

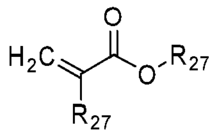

(VI)

, a compound of formula (VII)

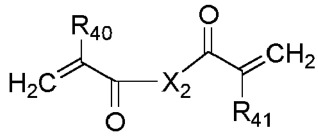

(VII)

and a mixture thereof
wherein:

$R_{27}$ are independently from $(C_1\text{-}C_6)$alkyl;
$R_{40}$ and $R_{41}$ are independently selected from the group consisting of H and $(C_1\text{-}C_6)$alkyl;
$X_2$ is selected from the group consisting of a compound of formula (VIII)

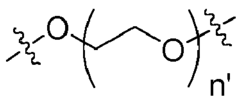

(VIII)

and a compound of formula (IX);

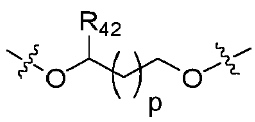

(IX)

and a mixture thereof;
wherein:

$R_{42}$ is selected from the group consisting of H and $(C_1\text{-}C_6)$alkyl;
p is an integer from 1 to 8; and
n' is an integer from 1 to 6.

**10.** The process according to claim 9, wherein the organic precursor is a compound of formula (VII)

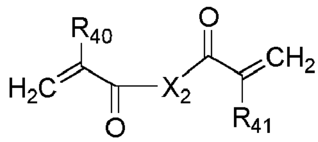

(VII)

wherein:

$R_{40}$ and $R_{41}$ are independently selected from the group consisting of H and $(C_1\text{-}C_6)$alkyl;
$X_2$ is selected from the group consisting of a compound of formula (VIII)

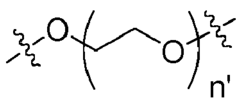

(VIII)

and a compound of formula (IX);

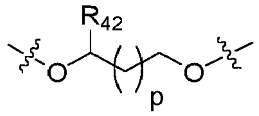

(IX)

and a mixture thereof;
wherein:

$R_{42}$ is selected from the group consisting of H and $(C_1\text{-}C_6)$alkyl;
p is an integer from 1 to 8; and
n' is an integer from 1 to 6.

**11.** The process according to any of the claims 1-10, wherein: the acid catalyst in aqueous solution is an inorganic acid independently selected from the group consisting of $H_2SO_4$, HCl, $HNO_3$, and a mixture thereof; the $(C_1\text{-}C_8)$alcohol is independently selected from the group consisting of methanol, ethanol, butanol, n-propanol, isopropanol, and a mixture thereof; and the complexing agent is selected from the group consisting of acetyl acetone, methacrylic acid, acetic acid, isobutyric acid, bipyridine, and a mixture thereof; particularly, the acid is $HNO_3$, the $(C_1\text{-}C_8)$alcohol is ethanol and the complexing agent is methacrylic acid.

**12.** The process according to any of the claims 1-11, wherein the metal alkoxide and the semimetal alkoxide are independently a compound of formula (XIII)

$$(OR^{43})(OR^{44})(OR^{45})(OR^{46})Z \qquad \text{(XIII)}$$

wherein:

each one of $R^{43}$, $R^{44}$, $R^{45}$ and $R^{46}$ are independently selected from the group consisting of substituted or unsubstituted $(C_1\text{-}C_{14})$alkyl, $(C_5\text{-}C_6)$aryl, $(C_2\text{-}C_{14})$alkenyl and $(C_2\text{-}C_{14})$alkynyl group; and
Z is selected from the group consisting of the metal and semimetal atoms.

**13.** A coated substrate comprising a sol-gel layer obtainable by the process as defined in any of the claims 1-12.

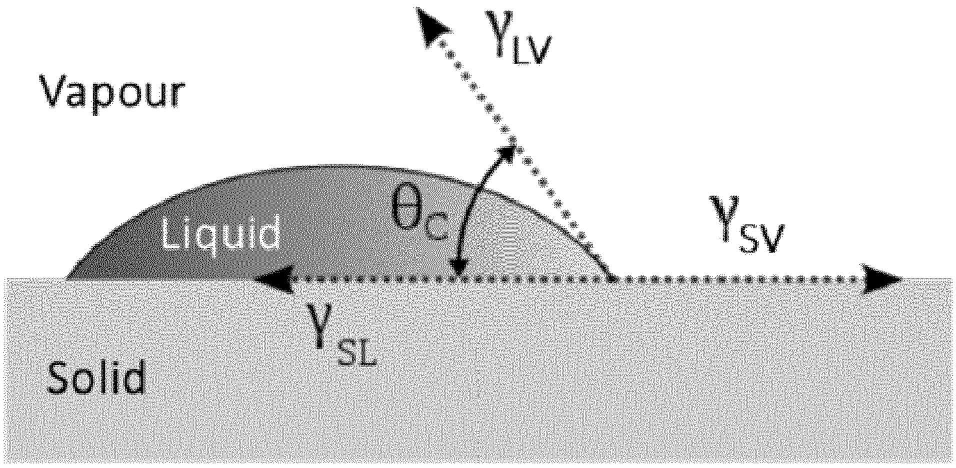


Fig. 1

Europäisches Patentamt
European Patent Office
Office européen des brevets

# EUROPEAN SEARCH REPORT

Application Number
EP 19 38 3186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/073186 A1 (FUNDACION TECNALIA RES & INNOVATION [ES]) 26 April 2018 (2018-04-26) * claim 1 * * tables 1,1b,2 * ----- | 1-13 | INV. C09D183/04 C09D5/14 C09D5/16 C09D183/10 |
| A | WO 2018/130701 A1 (FUNDACION TECNALIA RES & INNOVATION [ES]) 19 July 2018 (2018-07-19) * claim 1 * * table 1b * ----- | 1-13 | |

TECHNICAL FIELDS SEARCHED (IPC)
C09D
C09G
C08G

The present search report has been drawn up for all claims

1

| Place of search | Date of completion of the search | Examiner |
|---|---|---|
| The Hague | 2 June 2020 | Queste, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 38 3186

This annex lists the patent family members relating to the patent documents cited in the above-mentioned European search report. The members are as contained in the European Patent Office EDP file on
The European Patent Office is in no way liable for these particulars which are merely given for the purpose of information.

02-06-2020

| Patent document cited in search report | Publication date | Patent family member(s) | Publication date |
|---|---|---|---|
| WO 2018073186 A1 | 26-04-2018 | EP 3526279 A1 | 21-08-2019 |
| | | WO 2018073186 A1 | 26-04-2018 |
| WO 2018130701 A1 | 19-07-2018 | CN 110461791 A | 15-11-2019 |
| | | EP 3568379 A1 | 20-11-2019 |
| | | US 2019352223 A1 | 21-11-2019 |
| | | WO 2018130701 A1 | 19-07-2018 |

EPO FORM P0459

For more details about this annex : see Official Journal of the European Patent Office, No. 12/82